(19) Europäisches Patentamt
European Patent Office
Office européen des brevets

(11) **EP 2 640 759 B1**

(12) **EUROPÄISCHE PATENTSCHRIFT**

(45) Veröffentlichungstag und Bekanntmachung des Hinweises auf die Patenterteilung:
**19.08.2015 Patentblatt 2015/34**

(21) Anmeldenummer: **11782614.9**

(22) Anmeldetag: **14.11.2011**

(51) Int Cl.:
*C08G 18/10* (2006.01)     *C08G 18/62* (2006.01)
*C08G 18/71* (2006.01)     *C08G 18/77* (2006.01)
*C08G 18/79* (2006.01)     *C08G 18/80* (2006.01)
*C09D 175/04* (2006.01)

(86) Internationale Anmeldenummer:
**PCT/EP2011/070033**

(87) Internationale Veröffentlichungsnummer:
**WO 2012/065942 (24.05.2012 Gazette 2012/21)**

(54) **BESCHICHTUNGSMITTEL MIT HOHEM FESTKÖRPERGEHALT UND GUTEM VERLAUF SOWIE DARAUS HERGESTELLTE MEHRSCHICHTLACKIERUNGEN UND DEREN VERWENDUNG**

COATING COMPOSITION HAVING A HIGH SOLIDS CONTENT AND GOOD LEVELLING AND ALSO MULTILAYER SURFACE COATINGS PRODUCED THEREFROM AND THEIR USE

AGENTS DE REVÊTEMENT COMPORTANT UNE TENEUR ÉLEVÉE EN CORPS SOLIDES ET PRÉSENTANT UN BON PROFIL AINSI QUE PEINTURES MULTICOUCHES PRÉPARÉES À PARTIR DE CEUX-CI ET UTILISATION DESDITS AGENTS DE REVÊTEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.11.2010 US 415357 P**
            **19.11.2010 EP 10191828**

(43) Veröffentlichungstag der Anmeldung:
**25.09.2013 Patentblatt 2013/39**

(73) Patentinhaber: **BASF Coatings GmbH**
**48165 Münster (DE)**

(72) Erfinder:
• **GROENEWOLT, Matthijs**
**48147 Münster (DE)**
• **MÜLLER, Jörg**
**59075 Hamm (DE)**

(74) Vertreter: **Leifert & Steffan**
**Patentanwälte**
**Burgplatz 21-22**
**40213 Düsseldorf (DE)**

(56) Entgegenhaltungen:
**EP-A2- 0 864 575       EP-A2- 1 273 640**
**WO-A1-2008/074489**

**Beschreibung**

Die vorliegende Erfindung betrifft Beschichtungsmittel auf Basis aprotischer Lösemittel, enthaltend mindestens eine oligomere und/oder polymere hydroxylgruppenhältige Verbindung (A) sowie mindestens eine Verbindung (B) mit Silangruppen.

Derartige Beschichtungsmittel sind beispielsweise aus der WO 08/74491, WO 08/74490 und der WO 08/74489 bekannt. Die in diesen Beschichtungsmitteln eingesetzte, Isocyanatgruppen und Silangruppen enthaltende Verbindung (B) basiert auf bekannten Isocyanaten, bevorzugt auf den Biuret-Dimeren und Isocyanurat-Trimeren von Diisocyanaten, insbesondere von Hexamethylendiisocyanat. Diese Beschichtungsmittel weisen gegenüber herkömmlichen Polyurethan-Beschichtungsmitteln den Vorteil einer deutlich verbesserten Kratzfestigkeit bei gleichzeitig guter Witterungsbeständigkeit auf. Die dort beschriebenen Beschichtungsmittel werden insbesondere in der Automobilserienlackierung eingesetzt, allerdings ist auch die Verwendung in der Autoreparaturlackierung beschrieben. Nachteilig bei diesen Beschichtungsmitteln ist jedoch, dass eine Erniedrigung des Lösemittel-Anteils, also eine Erhöhung des nicht flüchtigen Anteils, der Beschichtungsmittel mit einer. Verschlechterung der Verlaufseigenschaften und somit mit einer deutlichen Verschlechterung der optischen Güte der resultierenden Beschichtungen verbunden ist.

Für den Autoreparaturbereich eingesetzte Beschichtungsmittel sind aber von gesetzlichen Emissionsrichtlinien betroffen (z.B. 31. Bundesimmisionsschutzverordnung). Die aktuelle europäische Richtlinie schreibt für Klarlacksysteme einen VOC-Wert (" Volatile Organic Content" ) von 420 g/l vor, was je nach Dichte des verwendeten Systems in nicht flüchtigen Anteilen von ca. 60 Gew.-% resultiert. Problematisch bei der Entwicklung von Systemen mit einem hohen nicht flüchtigen Anteil ist, dass sich in der Regel die Viskosität erhöht und sich damit die Fließfähigkeit des Systems erniedrigt, was sich nachteilig auf den Verlauf bzw. Decklackstand auswirkt. Um dem entgegenzuwirken, muss der nicht flüchtige Anteil bei gleichbleibender Viskosität angehoben werden. Dies erreicht man im Allgemeinen durch Viskositätsabsenkung des Härters und/oder des Bindemittels. Allerdings geht dies oft mit einer schlechteren physikalischen Filmbildung einher und hat längere Trocknungszeiten zur Folge. Gerade für Beschichtungsmittel, die im Bereich der Autoreparaturlackierung eingesetzt werden, ist dieser Zustand unvorteilhaft, da die im Bereich der Reparaturlackierung eingesetzten Beschichtungsmittel ohnehin mit langen Reaktionszeiten aufwarten.

Aus der US-A-5,691,439 sind Beschichtungsmittel bekannt, die neben hydroxylgruppenhaltigen Bindemitteln (A) als Vernetzer Verbindungen (B) mit Isocyanatgruppen enthalten, wobei es erfindungswesentlich ist, dass die Verbindungen (B) zur Absenkung der Oberflächenenergie außerdem Silangruppen oder Siloxangruppen und zur Erzielung transparenter Beschichtungen auch noch Allophanatgruppen aufweisen, so dass Beschichtungen mit verbesserten Oberflächeneigenschaften erhalten werden. Es fehlen in dieser Schrift aber Angaben, wie der Lösemittelanteil der Beschichtungsmittel erniedrigt werden kann und trotzdem gute Aushärtegeschwindigkeiten auch unter den Bedingungen der Autoreparaturlackierung gewährleistet werden.

Ferner sind in der EP-A-1 273 640 2K-Beschichtungsmittel beschrieben, enthaltend eine Polyol-Komponente und eine Vernetzerkomponente, bestehend aus aliphatischen und/oder cycloaliphatischen Polyisocyanaten oder den davon durch Polymerisierung, Allophanat-, Biuret- oder Urethanbildung abgeleiteten Polyisocyanaten, wobei 0,1 bis 95 mol-% der ursprünglich freien vorhandenen Isocyanatgruppen mit Bisalkoxysilylamin umgesetzt sind. Diese Beschichtungsmittel können zur Herstellung von Klar- oder Decklackierungen im Kraftfahrzeugbereich eingesetzt werden und weisen nach ihrer vollständigen Härtung eine gute Kratzbeständigkeit bei gleichzeitig guter Beständigkeit gegen Umwelteinflüsse auf. Jedoch sind in dieser Schrift keine Angaben enthalten, wie der Lösemittelanteil der Beschichtungsmittel erniedrigt werden kann, trotzdem gute Aushärtegeschwindigkeiten auch unter den Bedingungen der Autoreparaturlackierung gewährleistet und die Oberflächeneigenschaften der resultierenden Beschichtungen nicht verschlechtert werden.

In der WO 2001/98393 werden 2 K-Beschichtungsmittel beschrieben, enthaltend ein Polyol als Bindemittelkomponente sowie als Vernetzerkomponente eine Mischung aus einem Polyisocyanat (A) und einem Silan-Oligomer (B), welches mindestens zwei Isocyanatgruppen und zusätzlich Alkoxysilangruppen, bevorzugt Bisalkoxysilangruppen, enthält und welches hergestellt wird durch Umsetzung eines Polyisocyanates (PI) mit Alkoxysilylaminen, bevorzugt mit Bisalkoxysilylaminen, insbesondere mit Bis(3-propyltrimethoxysilyl)amin. Als Polyisocyanat (A) sowie als Polyisocyanat (PI) zur Herstellung der Komponente (B) werden bevorzugt Hexamethylendiisocyanat sowie deren Biurete und Isocyanurate eingesetzt. Diese Beschichtungsmittel werden insbesondere als Primer eingesetzt und auf die Haftung auf metallischen Untergründen, bevorzugt auf Aluminium-Untergründen, optimiert.

Weiterhin sind aus der EP-A-1 426 393 monomerenarme, uretdiongruppenhaltige Polyisocyanate bekannt, die außerdem den Vorteil aufweisen, dass sie eine gegenüber den früher verwendeten Uretdionen verbesserte Rückspaltstabilität aufweisen. Diese verbesserte Rückspaltstabilität wird dadurch erzielt, dass die Uretdione bei Temperaturen von <= 40 °C in Gegenwart von Trialkylphosphinen dimerisiert werden und anschließend die Trialkylphosphine abgetrennt werden. Die Uretdione werden beispielsweise als Härter in Beschichtungsmitteln eingesetzt. In dieser Schrift fehlen aber Angaben, wie die Oberflächeneigenschaften der resultierenden Beschichtungen beeinflusst werden können ebenso wie Angaben, wie eine gute Aushärtung auch unter den Bedingungen der Reparaturlackierung gewährleistet werden kann.

In der noch nicht veröffentlichten internationalen Patentanmeldung Nr. PCT/US 2010/028308 werden Beschichtungsmittel beschrieben, die neben einer hydroxylgruppenhaltigen Komponente (A) und einer isocyanatgruppenhaltigen Komponente (B) das Umsetzungsprodukt eines Uretdions mit einem Bisalkoxysilylamin oder einem Monoalkoxysilylamin enthalten, wobei das Umsetzungsprodukt des Uretdions mit dem Alkoxysilylamin keine restlichen Isocyanatgruppen mehr aufweist.

Die EP-B-864 575 beschreibt Verbindungen mit Alkoxysilan- und Harnstoffgruppen, die durch Umsetzung von Polyisocyanaten, wie beispielsweise Uretdionen und/oder Isocyanuraten, mit sekundären, Estergruppen aufweisenden Monoalkoxysilylaminen, wie insbesondere dem N-(3-Tri-methoxysilylpropyl)asparaginsäurediethylester, erhalten werden. Die Verbindungen mit Alkoxysilan- und Harnstoffgruppen weisen im wesentlichen keine restlichen Isocyanatgruppen mehr auf und werden gemäß EP-B-864 575 ggf. zusammen mit weiteren, Silangruppen enthaltenden Komponenten in Beschichtungsmitteln, die ausschließlich über eine Silanpolykondensation aushärten, eingesetzt. Die Verwendung dieser Verbindungen mit Älkoxysilan- und Harnstoffgruppen zusammen mit hydroxylgruppenhaltigen Komponenten und isocyanatgruppenhaltigen Komponenten ist dagegen in der EP-B-864 575 nicht beschrieben.

Schließlich sind in der noch nicht veröffentlichten Deutschen Patentarimeldung DE 10 2010 015 683.3-43 Beschichtungsmittel beschrieben, die neben einer Polyolkomponente uretdiongruppenhaltige Polyisocyanate enthalten, bei denen ein Teil der Isocyanatgruppen mit Alkoxysilylaminen, bevorzugt mit Bisalkoxysilylaminen, funktionalisiert ist. Beschichtungsmittel auf der Basis einher Mischung aus vorzugsweise nichtfunktionalisierten uretdiongruppenhaltigen Polyisocyanaten mit isocyanuratgruppenhaltigen, silanisierten Polyisocyanaten sind in dieser Schrift nicht beschrieben.

## Aufgabe

Aufgabe der vorliegenden Erfindung war es daher, Beschichtungsmittel, insbesondere für die Automobilreparaturlackierung, zur Verfügung zu stellen, die eine gute Aushärtung auch unter den Bedingungen der Reparaturlackierung gewährleisten, einen hohen Festkörpergehalt und somit einen möglichst niedrigen Lösemittelgehalt aufweisen, einen guten Verlauf bzw. Decklackstand zeigen und zu Beschichtungen mit guten Oberflächeneigenschaften und guter Zwischenschichthaftung führen. Die Zwischenschichthaftung wurde dabei mittels der Gitterschnittprüfung nach DIN 2409 beurteilt.

Zur Beurteilung des optischen Gesamteindrucks wurde die Messung des Oberflächenprofils der applizierten, eingebrannten Lackfilme mittels der Wavescan - Methode eingesetzt, die es gestattet, das sichtbare Profil von Lackfilmoberflächen zu vermessen. Hierzu wurde die Intensität der Reflektion ("Welligkeit") mittels des Gerätes "Wave Scan" der Firma Byk - Gardner gemessen, wobei auf einer Strecke von 10 cm 1250 Messpunkte aufgenommen wurden. Die Reflektion wird vom Messgerät in Langwelligkeit (" Long-Wave" ), d. h. die Varianz der Lichtintensität für Strukturen im Bereich von 0,6 mm bis 10 mm sowie in Kurzwelligkeit ("Short-Wave" ), d. h. die Varianz der Lichtintensität für Strukturen im Bereich von 0,1 mm bis 0,6 mm, unterteilt. Für einen guten visuellen Eindruck sind insbesondere niedrige Long-Wave Messwerte der resultierenden Beschichtungen bei möglichst niedrigen Schichtdicken entscheidend.

Ferner sollten Beschichtungsmittel zur Verfügung gestellt werden, die zu einem hochgradig witterungsstabilen Netzwerk führen und die gleichzeitig eine hohe Säurefestigkeit gewährleisten. Daneben sollten die Beschichtungsmittel zu Beschichtungen führen, die hochgradig kratzfest sind und insbesondere einen hohen Glanzerhalt nach Kratzbelastung aufweisen. Weiterhin sollten sich die Beschichtungen und Lackierungen, speziell die Klarlackierungen, auch in Schichtdicken > 40 $\mu$m herstellen lassen, ohne dass Spannungsrisse auftreten. Darüber hinaus sollten die Beschichtungsmittel die üblicherweise an die Klarlackschicht bei Automobilserienlackierungen und Autoreparaturlackierungen gestellten Anforderungen erfüllen.

Schließlich sollten die neuen Beschichtungsmittel einfach und sehr gut reproduzierbar herstellbar sein und während der Lackapplikation keine ökologischen Probleme bereiten.

## Lösung der Aufgabe

Im Lichte der obengenannten Aufgabenstellung wurden Beschichtungsmittel auf Basis aprotischer Lösemittel gefunden, enthaltend mindestens eine oligomere und/oder polymere hydroxylgruppenhaltige Verbindung (A), mindestens eine Verbindung (B1) mit mindestens einer Silangruppe der Formel (I)

$$-X-Si-R''_xG_{3-x} \qquad (I)$$

mit

G = identische oder unterschiedliche hydrolysierbare Gruppen, insbesondere G = Alkoxygruppe (OR'),

R' = Wasserstoff, Alkyl oder Cycloalkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R' = Ethyl und/oder Methyl,

3

X = organischer Rest, insbesondere linearer und/oder verzweigter Alkylen- oder Cycloalkylenrest mit 1 bis 20 Kohlenstoffatomen, ganz besonders bevorzugt X = Alkylenrest mit 1 bis 4 Kohlenstoffatomen,

R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R" = Alkylrest, insbesondere mit 1 bis 6 C-Atomen,

x = 0 bis 2, bevorzugt 0 bis 1, besonders bevorzugt x = 0

und

mindestens eine, von der Komponente (B1) verschiedene, Verbindung (B2) mit mindestens 2 Isocyanatgruppen pro Molekül,

die dadurch gekennzeichnet sind, dass

> (i) die Verbindung (B2) Uretdiongruppen aufweist und
> (ii) die Verbindung (B2) aus einem linearen, aliphatischen Düsocyanat (DI) hergestellt worden ist.

Gegenstand der vorliegenden Erfindung sind außerdem mehrstufige Beschichtungsverfahren unter Verwendung dieser Beschichtungsmittel sowie die

Verwendung der Beschichtungsmittel als Klarlack für die Automobilreparaturlackierung und/oder für die Beschichtung von Automobilanbauteilen und/oder Kunststoffsubstraten bzw. Verwendung des mehrstufigen Beschichtungsverfahrens für die Automobilreparaturlackierung und/oder für die Beschichtung von Kunststoffsubstraten.

Im Hinblick auf den Stand der Technik war es überraschend und für den Fachmann nicht vorhersehbar, dass die Aufgaben, die der vorliegenden Erfindung zugrunde lagen, mit Hilfe der erfindungsgemäßen Beschichtungsmittel gelöst werden konnten.

So ist es insbesondere überraschend, dass die erfindungsgemäßen Beschichtungsmittel eine gute Aushärtung auch unter den Bedingungen der Reparaturlackierung gewährleisten, einen hohen Festkörpergehalt und somit einen möglichst niedrigen Lösemittelgehalt aufweisen, einen guten Verlauf bzw. Decklackstand zeigen und zu Beschichtungen mit guten Oberflächeneigenschaften und guter Zwischenschichthaftung führen. So weisen die resultierenden Beschichtungen insbesondere die für einen guten visuellen Eindruck wichtigen niedrigen Long-Wave Messwerte bei möglichst niedrigen Schichtdicken auf.

Ferner führen die Beschichtungsmittel zu einem hochgradig witterungsstabilen Netzwerk und gewährleisten gleichzeitig eine hohe Säurefestigkeit. Daneben führen die Beschichtungsmittel zu Beschichtungen, die hochgradig kratztest sind und insbesondere einen hohen Glanzerhalt nach Kratzbelastung aufweisen. Weiterhin lassen sich die Beschichtungen und Lackierungen, speziell die Klarlackierungen, auch in Schichtdicken > 40 herstellen, ohne dass Spannungsrisse auftreten. Darüber hinaus erfüllen die Beschichtungsmittel die üblicherweise an die Klarlackschicht bei Automobilserienlackierungen und Autoreparaturlackierungen gestellten Anforderungen.

Schließlich sind die neuen Beschichtungsmittel einfach und sehr gut reproduzierbar herstellbar und bereiten während der Lackapplikation keine ökologischen Probleme.

**Beschreibung der Erfindung**

**Die erfindungsgemäßen Beschichtungsmittel**

Insbesondere handelt es sich bei den erfindungsgemäßen Beschichtungsmitteln um thermisch härtbare Beschichtungsmittel, also bevorzugt um Beschichtungsmittel, die im wesentlichen frei sind von strahlenhärtbaren ungesättigten Verbindungen, insbesondere völlig frei sind von strahlenhärtbaren ungesättigten Verbindungen.

**Die silangruppenhaltigen Verbindung (B1) und die isocyanatgruppenhaltigen Verbindungen (B2)**

Als Vernetzungsmittel enthalten die erfindungsgemäßen Beschichtungsmittel eine Mischung aus (a) einer oder mehreren Verbindungen (B1) mit mindestens einer Silangruppe und ggf. mit freien, d.h. unblockierten, und/oder blockierten Isocyanatgruppen und (β) einer oder mehreren Verbindungen (B2) mit mindestens zwei freien, d.h. unblockierten, und/oder blockierten Isocyanatgruppen. Bevorzugt enthalten die erfindungsgemäßen Beschichtungsmittel Verbindungen (B2) mit freien Isocyanatgruppen und - falls (B1) noch-Isocyanatgruppen aufweist- Verbindungen (B1) mit freien Isocyanatgruppen.

Handelt es sich um einkomponentige Beschichtungsmittel, so werden isocyanatgruppenhaltige Verbindungen (B2) und - falls (B1) noch Isocyanatgruppen aufweist - Verbindungen (B1) gewählt, deren freie Isocyanatgruppen mit den üblichen Blockierungsmitteln blockiert sind. Beispielsweise können die Isocyanatgruppen mit substituierten Pyrazolen, insbesondere mit Alkylsubstituierten Pyrazolen, wie 3-Methylpyrazol, 3,5-Dimethylpyrazol, 4-Nitro-3,5-dimethylpyrazol, 4-Bromo-3,5-dimethylpyrazol u. Ä. blockiert werden. Ganz besonders bevorzugt werden die Isocyanatgruppen der Komponenten (B1) und (B2) mit 3,5-Dimethylpyrazol blockiert.

Die als Komponente (B1) in dem Beschichtungsmittel eingesetzte Verbindung enthält mindestens eine Silangruppe der Formel (I)

$$-X-Si-R''_xG_{3-x} \qquad (I)$$

mit

G = identische oder unterschiedliche hydrolysierbare Gruppen, insbesondere G = Alkoxygruppe (OR'),

R' = Wasserstoff, Alkyl oder Cycloalkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R' = Ethyl und/oder Methyl,

X = organischer Rest, insbesondere linearer und/oder verzweigter Alkylen- oder Cycloalkylenrest mit 1 bis 20 Kohlenstoffatomen, ganz besonders bevorzugt X = Alkylenrest mit 1 bis 4 Kohlenstoffatomen,

R'' = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R'' = Alkylrest; insbesondere mit 1 bis 6 C-Atomen,

x = 0 bis 2, bevorzugt 0 bis 1, besonders bevorzugt x = 0.

Die als Komponente (B1) in dem Beschichtungsmittel eingesetzte Verbindung kann zusätzlich zu den Silangruppen noch freie und/oder blockierte Isocyanatgruppen aufweisen. Bevorzugt ist jedoch die in dem Beschichtungsmittel eingesetzte Komponente (B1) im Wesentlichen isocyanatgruppenfrei.

Zur Herstellung der Komponente (B1) geeignet sind an sich bekannte substituierte oder unsubstituierte aromatische, aliphatische, cycloaliphatische und/oder heterocyclische Polyisocyanate. Beispiele für bevorzugte Polyisocyanate sind: 2,4-Toluoldiisocyanat, 2,6-Toluoldusocyanat, Diphenylmethan-4,4' -diisocyanate, Diphenylmethan-2,4' -diisocyanat, p-Phenylendusocyanat, Biphenyldiisocyanate, 3,3' -Dimethyl-4,4' -diphenylendiisocyanat, Tetramethylen-1,4-diisocyanat, Hexamethylen-1,6-diisocyanat, 2,2,4-Tri-methylhexane-1,6-diisocyanat, Isophorondiisocyanat, Ethylendiisocyanat, 1,12-Dodecandiisocyanat, Cyclobutan-1,3-diisocyanat, Cyclohexan-1,3-diisocyanat, Cyclohexan-1,4-diisocyanat, Methylcyclohexyldiisocyanate, Hexahydrotoluol-2,4-diisocyanat, Hexahydrotoluol-2,6-diisocyanat, Hexahydrophenylen-1,3-diisocyanate, Hexahydrophenylen-1,4-diisocyanat, Perhydrodiphenylmethan-2,4' -diisocyanate, 4,4' -Methylendicyclohexyldiisocyanat (z.B. Desmodur® W der Fa. Bayer AG), Tetramethylxylyldiisocyanate (z.B. TMXDI ® der Fa. American Cyanamid) und Mischungen der vorgenannten Polyisocyanate.

Bevorzugte Polyisocyanate sind auch die Biuret-Dimere und die Isocyanurat-Trimere der vorgenannten Diisocyanate. Besonders bevorzugte Polyisocyanate PI sind Hexamethylen-1,6-diisocyanat, Isophorondiisocyanat und 4,4' - Methylendicyclohexyldiisocyanat, deren Biuret-Dimere und/oder Isocyanurat-Trimere.

Besonders bevorzugt enthält das Beschichtungsmittel mindestens eine isocyanatgruppenhaltige Verbindung (B1), die zusätzlich zu den Silangruppen noch Isocyanuratgruppen und/oder Allophanatgruppen aufweist.

In einer weiteren Ausführungsform der Erfindung sind die Polyisocyanate Polyisocyanat-Präpolymerisate mit Urethan-Struktureinheiten, welche durch Umsetzung von Polyolen mit einem stöchiometrischen Überschuss an vorgenannten Polyisocyanaten erhalten werden. Solche Polyisocyanat-Präpolymere sind beispielsweise in US-A-4,598,131 beschrieben.

Besonders bevorzugt enthält das Beschichtungsmittel mindestens eine Verbindung (B1), die

zwischen 0 und 100 mol-%, bezogen auf die Gesamtheit der Struktureinheiten (II) und (III), mindestens einer Struktureinheit der Formel (II)

$$-NR-(X-SiR''x(OR')3-x) \qquad (II),$$

und

zwischen 0 und 100 mol-%, bezogen auf die Gesamtheit der Struktureinheiten (II) und (III), mindestens einer Struktureinheit der Formel (III)

$$-N(X-SiR''x(OR')3-x)n(X'-SiR''y(OR')3-y)m \qquad (III)$$

aufweist, wobei

R = Wasserstoff, Alkyl, Cycloalkyl, Aryl oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl,

X, X' = linearer und/oder verzweigter Alkylen oder Cycloalkylenrest mit 1 bis 20 Kohlenstoffatomen, bevorzugt X, X' = Alkylenrest mit 1 bis 4 Kohlenstoffatomen,

n = 0 bis 2, m = 0 bis 2, m+n = 2, sowie x, y = 0 bis 2

ist und R' sowie R'' die bei Formel (I) angegebene Bedeutung haben.

Die jeweiligen bevorzugten Alkoxyreste (OR') können gleich oder verschieden sein, entscheidend für den Aufbau der Reste ist jedoch, inwiefern diese die Reaktivität der hydrolysierbaren Silangruppen beeinflussen. Bevorzugt ist R' ein Alkylrest, insbesondere mit 1 bis 6 C-Atomen. Besonders bevorzugt sind Reste R', die die Reaktivität der Silangruppen erhöhen, d.h. gute Abgangsgruppen darstellen. Insofern ist ein Methoxy - Rest gegenüber einem Ethoxy - Rest und dieser wiederum gegenüber einem Propoxyrest bevorzugt. Besonders bevorzugt ist daher R' = Ethyl und/oder Methyl, insbesondere Methyl.

Des Weiteren kann die Reaktivität von organofunktionellen Silanen auch durch die Länge der Spacer X, X' zwischen Silan - Funktionalität und organischer funktioneller Gruppe, die zur Reaktion mit dem modifizierenden Bestandteil dient, erheblich beeinflusst werden. Beispielhaft dafür seien die "alpha"-Silane genannt, die bei der Firma Wacker erhältlich sind, und bei denen eine Methylengruppe anstelle der bei "gamma" -Silane vorhandenen Propylengruppe zwischen Si-Atom und funktioneller Gruppe ist.

Die erfindungsgemäß bevorzugt eingesetzten, mit den Struktureinheiten (II) und (III) funktionalisierten Verbindungen (B1) werden besonders bevorzugt durch Umsetzung von Di- und/oder Polyisocyanaten (PI) mit mindestens einer Verbindung der Formel (IIa)

$$H-NR-(X-SiR''_x(OR')_{3-x}) \qquad (IIa),$$

und mit mindestens einer Verbindung der Formel (IIIa)

$$HN(X-SiR''_x(OR')_{3-x})_n(X'-SiR''_y(OR')_{3-y})_m \qquad (IIIa),$$

erhalten, wobei die Substituenten die oben genannte Bedeutung haben.

Erfindungsgemäß bevorzugte Verbindungen (IIIa) sind Bis(2-ethyltrimethoxysilyl)amin, Bis(3-propyltrimethoxysilyl)amin, Bis(4-butyltrimethoxysilyl)amin, Bis(2-ethyltriethoxysilyl)amin, Bis(3-propyltriethoxysilyl)amin und/oder Bis(4-butyltriethoxysilyl)amin. Ganz besonders bevorzugt ist Bis(3-propyltrimethoxysilyl)amin. Solche Aminosilane sind beispielsweise unter dem Markennamen DYNASILAN ® der Fa. DEGUSSA bzw. Silquest ® der Fa. OSI verfügbar.

Erfindungsgemäß bevorzugte Verbindungen (IIa) sind Aminoalkyl-trialkoxysilane, wie vorzugsweise 2-Aminoethyltrimethoxysilan, 2-Aminoethyltriethoxysilan, 3-Aminopropyltrimethoxysilan, 3-Aminopropyltriethoxysilan, 4-Aminobutyltrimethoxysilan, 4-Aminobutyltriethoxysilan. Besonders bevorzugte Verbindungen (Ia) sind N-(2- (trimethoxysilyl)ethyl)alkylamine, N-(3-(trimethoxysilyl)propyl)alkylamine, N-(4-(trimethoxysilyl)butyl) alkylamine,'N-(2-(triethoxysilyl)ethyl)alkylamine, N-(3-(triethoxysilyl)propyl)alkylamine und/oder N-(4-(triethoxysilyl)butyl)alkylamine. Ganz besonders bevorzugt ist N-(3-(trimethoxysilyl) propyl)butylamin. Solche Aminosilane sind beispielsweise unter dem Markennamen DYNASILAN ® der Fa. DEGUSSA bzw. Silquest ® der Fa. OSI verfügbar.

Es ist bevorzugt, dass die isocyanatgruppenhaltige Verbindung (B1) 0 bis 100 mol-%, besonders bevorzugt 5 bis 70 mol-%, und ganz besoriders bevorzugt 10 bis 50 mol-%, mindestens einer Monosilan-Struktureinheit (II) der Formel (II) sowie 0 bis 100 mol-%, besonders bevorzugt 30 bis 95 mol-%, und ganz besonders bevorzugt 50 bis 90 mol-%, mindestens einer Bissilan-Struktureinheit (III) der Formel (III), jeweils bezogen auf die Gesamtheit der Struktureinheiten (II) und (III), aufweist.

Es ist besonders bevorzugt, dass in der Komponente (B1) der Gesamtanteil der zu den Struktureinheiten (II) und/oder (III) umgesetzten Isocyanatgruppen zwischen 10 und 100 mol-%, bevorzugt zwischen 30 und 100 mol-% und besonders bevorzugt zwischen 50 und 100 mol-% liegt.

Bei gleichem Festkörpergehalt hat nämlich in der Regel die Komponente (B1) eine höhere Viskosität als die Komponente (B2). Es ist daher wünschenswert, den Anteil der Komponente (B1) möglichst niedrig, den Anteil der Komponente (B2) dagegen möglichst hoch zu wählen. Um aber dennoch über die Komponente (B1) eine ausreichend hohe Silanfunktionalität in dem Beschichtungsmittel zu gewährleisten, ist daher in der Komponente (B1) der Anteil der Silangruppen möglichst hoch und der Anteil der restlichen, nicht umgesetzten Isocyanatgruppen möglichst niedrig zu wählen.

Ganz besonders bevorzugte isocyanatgruppenhaltige Verbindungen (B1) sind Umsetzungsprodukte von Hexamethylen-1,6-diisocyanat und/oder Isophorondiisocyanat und/oder 4,4'-Methylendicyclohexyldiisocyanat und/oder deren Isocyanurat-Trimere mit Bis(3-propyltrimethoxysilyl)amin und ggf. N-(3-(trimethoxysilyl) propyl)butylamin.

Der Festkörpergehalt der erfindungsgemäß eingesetzten Polyisocyanat-Komponente (B1) beträgt vorteilhaft mehr als 60 Gew.-%, bevorzugt mindestens 62 Gew.-%.

Die als Komponente (B2) in dem Beschichtungsmittel eingesetzte Verbindung mit mindestens zwei freien, d.h. unblockierten, und/oder blockierten Isocyanatgruppen pro Molekül ist aus mindestens einem linearen, aliphatischen Diisocyanat (DI) hergestellt worden. Hierdurch ist gewährleistet, dass die resultierenden Verbindungen (B2) sowohl in Form festkörperreicher Lösungen mit einem Festkörpergehalt von mehr als 70 Gew.-%, insbesondere mindestens 75 Gew.-%, in den erfindungsgemäßen Beschichtungsmitteln eingesetzt werden können und gleichzeitig auch die Oberflächeneigenschaften, wie insbesondere der Verlauf, der resultierenden Beschichtungen sehr gut sind.

Bevorzugt ist die als Komponente (B2) in dem Beschichtungsmittel eingesetzte isocyanatgruppenhaltige Verbindung aus mindestens einem linearen, aliphatischen Diisocyanat (DI) mit 3 bis 12 C-Atomen, insbesondere mit 4 bis 10 C-Atomen und ganz besonders mit 5 bis 6 C-Atomen hergestellt worden.

Beispiele für die zur Herstellung der Komponente (B2) geeignete lineare, aliphatische Diisocyanate (DI) sind Butandüsocyanat, Pentandiisocyanat, Hexandiisocyanat, Heptandiisocyanat, Octandiisocyanat, Nonandiisocyanat, Decandiisocyanat, Undecandiisocyanat, Dodecandiisocyanat und insbesondere Hexandiisocyanat.

Ferner ist es erfindungswesentlich, dass die isocyanatgruppenhaltige Verbindung (B2) zusätzlich zu den freien und/oder blockierten Isocyanatgruppen noch Uretdiongruppen enthält. Durch die Verwendung von isocyanatgruppenhaltigen Verbindungen mit Uretdiongruppen werden im Gegensatz zur Verwendung von Isocyanuraten und im Gegensatz zur Verwendung von Biureten und/oder Allophanaten der gleichen Diisocyanate Beschichtungen mit wesentlich besseren Oberflächeneigenschaften, insbesondere mit niedrigeren Long-Wave Werten, erhalten. Die Long-Wave Werte der applizierten, eingebrannten Lackfilme werden mittels der Wävescan - Methode gemessen, die es gestattet, das sichtbare Profil von Lackfilmoberflächen zu vermessen. Hierzu wurde die Intensität der Reflektion ("Welligkeit" ) mittels des Gerätes "Wave Scan" der Firma Byk - Gardner gemessen, wobei auf einer Strecke von 10 cm 1250 Messpunkte aufgenommen wurden. Die Reflektion wird vom Messgerät in Langwelligkeit ("Long-Wave"), d. h. die Varianz der Lichtintensität für. Strukturen im Bereich von 0,6 mm bis 10 mm sowie in Kurzwelligkeit ("Short-Wave" ), d. h. die Varianz der Lichtintensität für Strukturen im Bereich von 0,1 mm bis 0,6 mm, unterteilt.

Bevorzugt weist die Verbindung (B2) einen Uretdiongruppengehalt.> 50 mol-%, bevorzugt mehr als 50 bis 90 mol-%, besonders bevorzugt 65 bis 80 mol-%, jeweils bezogen auf die Gesamtheit der durch Isocyanat-Oligomerisierung des linearen, aliphatischen Diisocyanates (DI) entstandenen Strukturtypen, auf. Als Komponente (B2) geeignete Uretdione sind beispielsweise auch in der EP-A-1 426 393, Seite 2, Absatz [0012], bis Seite 4, Absatz [0030], beschrieben. Es ist dabei bekannt, dass handelsübliche Uretdione 5 bis 30 Gew.-% des entsprechenden Isocyanurates des jeweiligen Diisocyanats enthalten können, jeweils bezogen auf das Gesamtgewicht des handelsüblichen Produktes. Dieser Isocyanuratanteil ist nicht unbedingt bevorzugt, bereitet aber im Allgemeinen auch keine Probleme in den erfindungsgemäßen Beschichtungsmitteln. Diese über die Uretdione in das Beschichtungsmittel eingeführten Isocyanurate sind dann formal nicht der uretdiongruppenhaltigen Komponente (B2), sondern der oben beschriebenen Komponente (B1) zuzurechnen.

Es ist bevorzugt, dass in der uretdiongruppenhaltigen Verbindung (B2) weniger als 5 Mol-%, bevorzugt weniger als 2,5 Mol-% und besonders bevorzugt keine der Isocyanatgruppen zu Struktureinheiten (I), (II) und/oder (III) umgesetzt worden sind.

Der Festkörpergehalt der erfindungsgemäß eingesetzten Polyisocyanat-Komponente (B2) beträgt vorteilhaft mehr als 70 Gew.-%, bevorzugt mindestens 75 Gew.-%.

Erfindungsgemäß bevorzugt sind Beschichtungsmittel, bei denen das Mischungsverhältnis der uretdiongruppenhaltigen Komponente (B2) zur silangruppenhaltigen Komponente (B1) zwischen 0,5 Äquivalenten der Komponente (B2) zu 1,0 Äquivalenten der Komponente (B1) und 50,0 Äquivalenten der Komponente (B2) zu 1,0 Äquivalenten der Komponente (B1), bevorzugt zwischen 0,8 Äquivalenten der Komponente (B2) zu 1,0 Äquivalenten der Komponente (B1) und 20,0 Äquivalenten der Komponente (B2) zu 1,0 Äquivalenten der Komponente (B1), liegt.

Die Äquivalente der Verbindung (B1) bzw. (B2) werden dabei wie üblich dadurch ermittelt, dass die Einsatzmenge von (B1) bzw. (B2) in Gramm durch das Äquivalentgewicht der Verbindung (B1) bzw. (B2) in Gramm dividiert wird. Der evt. in handelsüblichen, uretdiongruppenhaltigen Verbindungen (B2) enthaltene Anteil an isocyanuratgruppenhaltigen Verbindungen wird bei der Berechnung des Mischungsverhältnisses in Äquivalenten zur Vereinfachung der Komponente (B2) zugerechnet, d.h. bei der nachfolgend aufgeführten Berechnung wird von einer idealisierten Verbindung (B2) ausgegangen, zumal der - falls überhaupt vorhandene - allenfalls geringfügige Anteil an isocyanuratgruppenhaltiger Verbindung in (B2) nur einen äußerst geringen Einfluss auf das Äquivalentverhältnis hätte.

Zur Ermittlung des Äquivalentgewichtes der Verbindung (B1) wird zunächst das Äquivalentgewicht EEW der silangruppenfreien Verbindung (B1) in Gramm bekanntermaßen aus dem gemäß DIN EN ISO 3219/A.3 gemessenen Isocyanatgruppengehalt in Gew.-% rechnerisch ermittelt:

EEW (B1 nicht silanisiert) = (100 Gew.-% * 42 g) /Isocyanatgehalt in Gew.-% Das Äquivalentgewicht EEW der silanisierten Verbindung (B1) in Gramm wird ebenfalls rechnerisch mittels des gerade beschriebenen Äquivalentgewichtes EEW der nicht silanisierten Verbindung (B1), dem Anteil der silanisierten der Isocyanatgruppen c, dem Anteil an Silaneinheiten (I) as1, dem Anteil an Silaneinheiten (II) as2, dem Anteil an Silaneinheiten (III) as3 sowie den theoretischen Äquivalentgewichten der Silaneinheiten (I), (II) und (III) wie folgt ermittelt:

$$\text{EEW (B1 silanisiert)} = \text{EEW (B1, nicht silanisiert)} + c*[(as1*\text{EEW (I)}) + (as2*\text{EEW (II)}) + (as3*\text{EEW (III)})]$$

mit

| | |
|---|---|
| c | = Umsetzungsgrad der in B1 ursprünglich vorhandenen Isocyanatgruppen zu Silaneinheiten der Formeln (I)+(II)+(III) in mol-%, dividiert durch 100 mol-% |
| as1 | = Anteil der in B1 zu den Struktureinheiten (I) umgesetzten Isocyanat-gruppen in mol-%, dividiert durch 100 mol-%, mit der Maßgabe, dass die Summe der Struktureinheiten (I) + (II) + (III) stets 100 mol-% ergibt |
| as2 | = Anteil der in B1 zu den Struktureinheiten (II) umgesetzten Isocyanat-gruppen in mol=%, dividiert durch 100 mol-%, mit der Maßgabe, dass die Summe der Struktureinheiten (I) + (II) + (III) stets 100 mol-% ergibt |
| as3 | = Anteil der in B1 zu den Struktureinheiten (III) umgesetzten Isocyanat-gruppen in mol-%, dividiert durch 100 mol-%, mit der Maßgabe, dass die Summe der Struktureinheiten (I) + (II) + (III) stets 100 mol-% ergibt |
| EEW(I) | = rechnerisch aus der Strukturformel ermitteltes Äquivalentgewicht der Struktüreinheit (I): $- X-Si-R''_xG_{3-x}$, wobei X, R'', G, x die oben bei Formel (I) angegebene Bedeutung aufweisen |
| EEW(II) | = rechnerisch aus der Strukturformel ermitteltes Äquivalentgewicht der Struktureinheit (II): -NR-(X-SiR''x(OR')3-x), wobei X, R, R'', R', x die oben bei Formel (II) angegebene Bedeutung aufweisen |
| EEW(III) | = rechnerisch aus der Strukturformel ermitteltes Äquivalentgewicht der Struktureinheit (III): -N(X-SiR''x(OR')3-x)n(X'-SiR''y(OR')3-y)m, wobei X, R'', R', x die oben bei Formel (III) angegebene Bedeutung aufweisen. |

Zur Ermittlung des Äquivalentgewichtes der Verbindung (B2) wird wiederum zunächst das Äquivalentgewicht EEW der silangruppenfreien Verbindung (B2) in Gramm bekanntermaßen aus dem gemäß DIN EN ISO 3219/A.3 gemessenen Isocyanatgruppengehalt in Gew.-% rechnerisch ermittelt:

$$EEW \text{ (B2 nicht silanisiert)} = (100 \text{ Gew.-\%} * 42 \text{ g}) / \text{Isocyanatgehalt in Gew.-\%}$$

Falls die Komponente (B2) Silangruppen enthält, wird das Äquivalentgewicht EEW der silanisierten Verbindung (B2) in Gramm ebenfalls rechnerisch mittels des gerade beschriebenen Äquivalentgewichtes EEW der nicht silanisierten Verbindung (B2), dem Anteil der silanisierten der Isocyanatgruppen c', dem Anteil an Silaneinheiten (I) as'1, dem Anteil an Silaneinheiten (II) as'2, dem Anteil an Silaneinheiten (III) as'3 sowie den theoretischen Äquivalentgewichten der Silaneinheiten, (I), (II) und (III) wie folgt ermittelt:

$$EEW \text{ (B2 silanisiert)} = EEW \text{ (B2, nicht silanisiert)} + c'*[(as'1*EEW \text{ (I)}) + (as'2*EEW \text{ (II)}) + (as'3*EEW \text{ (III)}]$$

mit

| | |
|---|---|
| c' | = Umsetzungsgrad der ursprünglich in (B2) vorhandenen Isocyanatgruppen zu Silaneinheiten der Formeln (I)+(II)+(III) in mol-%, dividiert durch 100 mol-% |
| as'1 | = Anteil der in B2 zu den Struktureinheiten (I) umgesetzten Isocyanat-gruppen in möl-%, dividiert durch 100 mol-%, mit der Maßgabe, dass die Summe der Struktureinheiten (I) + (II) + (III) stets 100 mol-% ergibt |
| as'2 | = Anteil der in B2 zu den Struktureinheiten (II) umgesetzten Isocyanat-gruppen in mol-%, dividiert durch 100 mol-%, mit der Maßgabe, dass die Summe der Struktureinheiten (I) + (II) + (III) stets 100 mol-% ergibt |
| as'3 | = Anteil der in B2 zu den Struktureinheiten (III) umgesetzten Isocyanatgruppen in mol-%, dividiert durch 100 mol-%, mit der Maßgabe, dass die Summe der Struktureinheiten (I) + (II) + (III) stets 100 mol-% ergibt. |

**Die hydroxylgruppenhaltige Verbindung (A)**

Als hydroxylgruppenhaltige Verbindung (A) wird mindestens ein oligomeres und/oder polymeres Polyol eingesetzt.

Die bevorzugten oligo- und/oder polymeren Polyole (A) weisen massenmittlere Molekulargewichte Mw > 500 Dalton, gemessen mittels Gelpermeationschromatographie (GPC) gegen einen Polystyrolstandard, bevorzugt zwischen 800 und 100.000 Dalton, insbesondere zwischen 1.000 und 50.000 Dalton auf.

Besonders bevorzugt sind Polyesterpolyole, Polyurethanpolyole, Polysiloxanpolyole, Polyacrylatpolyole und/oder Polymethacrylatpolyole sowie deren Mischpolymerisate, im folgenden Polyacrylatpolyole genannt.

Die Polyole weisen bevorzugt eine OH-Zahl von 30 bis 400 mg KOH/g, insbesondere zwischen 100 und 300 KOH/g, auf. Die Hydroxylzahl (OH-Zahl) gibt an, wie viel mg Kaliumhydroxid der Essigsäure-Menge äquivalent sind, die von 1 g Substanz bei der Acetylierung gebunden wird. Die Probe wird bei der Bestimmung mit Essigsäureanhydrid-Pyridin gekocht und die entstehende Säure mit Kaliumhydroxidiösung titriert (DIN 53240-2).

Die Glasübergangstemperaturen, gemessen mit Hilfe von DSC-Messungen nach DIN-EN-ISO 11357-2, der Polyole liegen bevorzugt zwischen.-150 und 100 °C, besonders bevorzugt zwischen -120°C und 80°C.

Geeignete Polyesterpolyole sind beispielsweise in EP-A-0 994 117 und EP-A-1 273 640 beschrieben. Polyurethanpolyole werden vorzugsweise durch Umsetzung von Polyesterpolyol-Präpolymeren mit geeigneten Di- oder Polyisocyanaten hergestellt und sind beispielsweise in EP-A-1 273 640 beschrieben. Geeignete Polysiloxanpolyole sind beispielsweise in der WO-A-01/09260 beschrieben, wobei die dort angeführten Polysiloxanpolyole bevorzugt in Kombination mit weiteren Polyolen, insbesondere solchen mit höheren Glasübergangstemperaturen, zum Einsatz kommen können.

Die erfindungsgemäß ganz besonders bevorzugten Poly(meth)acrylatpolyole sind in der Regel Copolymerisate und weisen vorzugsweise massenmittlere Molekulargewichte Mw zwischen 1.000 und 20.000 Dalton, insbesondere zwischen 1.500 und 10.000 Dalton auf, jeweils gemessen mittels Gelpermeationschromatographie (GPC) gegen einen Polystyrolstandard.

Die Glasübergangstemperatur der Copolymerisate liegt in der Regel zwischen - 100 und 100 °C, insbesondere zwischen -50 und 80 °C (gemessen mittels DSC-Messungen nach DIN-EN-ISO 11357-2).

Die Poly(meth)acrylatpolyole weisen bevorzugt eine OH-Zahl von 60 bis 250 mg KOH/g, insbesondere zwischen 70 und 200 KOH/g, sowie eine Säurezahl zwischen 0 und 30 mg KOH/g, auf.

Die Hydroxylzahl (OH-Zahl) gibt an, wie viel mg Kaliumhydroxid der Essigsäure-Menge äquivalent sind, die von 1 g Substanz bei der Acetylierung gebunden wird. Die Probe wird bei der Bestimmung mit Essigsäureanhydrid-Pyridin gekocht und die entstehende Säure mit Kaliumhydroxidlösung titriert (DIN 53240-2). Die Säurezahl gibt hierbei die Anzahl der mg Kaliumhydroxid an, die zur Neutralisation von 1 g der jeweiligen Verbindung verbraucht wird (DIN EN ISO 2114).

Als hydroxylgruppenhaltige Monomerbausteine werden bevorzugt Hydroxyalkylacrylate und/oder Hydroxyalkylmethacrylate, wie insbesondere 2-Hydroxyethylacrylat, 2-Hydroxyethylmethacrylat, 2-Hydroxypropylacrylat, 2-Hydroxypropylmethacrylat, 3-Hydroxypropylacrylat, 3-Hydroxypropylmethacrylat, 3-Hydroxybutylacrylat, 3-Hydroxybutylmethacrylat sowie insbesondere 4-Hydroxybutylacrylat und/oder 4-Hydroxybutylmethacrylat eingesetzt.

Als weitere Monomerbausteine werden für die Poly(meth)acrylatpolyole bevorzugt Alkylmethacrylate und/oder Alkylmethacrylate eingesetzt, wie vorzugsweise Ethylacrylat, Ethylmethacrylat, Propylacrylat, Propylmethacrylat, Isopropylacrylat, Isopropylmethacrylat, Butylacrylat, Butylmethacrylat, Isobutylacrylat, Isobutylmethacrylat, tert-Butylacrylat, tert-Butylmethacrylat, Amylacrylat, Amylmethacrylat, Hexylacrylat, Hexylmethacrylat, Ethylhexylacrylat, Ethylhexylmethacrylat, 3,3,5-Trimethylhexylacrylat, 3,3,5-Trimethylhexylmethacrylat, Stearylacrylat, Stearylmethacrylat, Laurylacrylat oder Laurylmethacrylat, Cycloalkylacrylate und/oder Cycloalkylmethacrylate, wie Cyclopentylacrylat, Cyclopentylmethacrylat, Isobornylacrylat, Isobornylmethacrylat oder insbesondere Cyclohexylacrylat und/oder Cyclohexylmethacrylat.

Als weitere Monomerbausteine für die Poly(meth)acrylatpolyole können vinylaromatische Kohlenwasserstoffe, wie Vinyltoluol, alpha-Methylstyrol oder insbesondere Styrol, Amide oder Nitrile der Acryl- oder Methacrylsäure, Vinylester oder Vinylether, sowie in untergeordneten Mengen insbesondere Acryl- und/oder Methacrylsäure eingesetzt werden.

Zur weiteren Erhöhung des Festkörpergehaltes der erfindungsgemäßen Beschichtungsmittel und zur weiteren Verbesserung der Oberflächengüte (niedrigere Long-Wave Werte), insbesondere im Falle eines geringeren Silanisierungsgrades der Verbindung (B), werden insbesondere lactonmodifizierte hydroxylgruppenhaltige oligomere und/oder polymere Verbindungen (A) eingesetzt. Besonders bevorzugt werden ε -caprolactonmodifizierte hydroxylgruppenhaltige oligomere und/oder polymere Verbindungen (A) und ganz besonders bevorzugt ε -caprolactonmodifizierte hydroxylgruppenhaltige Polyacrylatpolyole und/oder ε -caprolactonmodifizierte hydroxylgruppenhaltige Polymethacrylatpolyole eingesetzt.

Die lactonmodifizierten; insbesondere die ε -caprolactonmodifizierten hydroxylgruppenhaltigen oligomeren und/oder polymeren Verbindungen (A) können in dem Fachmann bekannter Weise dadurch hergestellt werden, dass zunächst die hydroxylgruppenhaltigen oligomeren und/oder polymeren Verbindungen hergestellt und anschließend mit dem Lacton bzw. mit ε -Caprolacton umgesetzt werden. Es ist aber auch möglich, zunächst einen Teil der monomeren Aufbaukomponenten, insbesondere einen Teil der hydroxylgruppenhaltigen monomeren Aufbaukomponenten, mit dem Lacton bzw. mit ε -Caprolacton umzusetzen und anschließend dann das lactonmodifizierte bzw. das ε -caprolactonmodifizierte Oligomer bzw. Polymer aufzubauen. Mit Lacton bzw. ε -Caprolacton modifizierte hydroxylgruppenhaltige Verbindungen (A) sind auch beispielsweise in der US-A-4, 546,046, Spalte 4, Zeilen 24, bis Spalte 7, Zeile 6, beschrieben.

In einer weiteren Ausführungsform der Erfindung kann die hydroxylgruppenhaltige Verbindung A neben den Hydroxylgruppen noch. Silangruppen (I) aufweisen.

**Die Kombination der Komponenten (A) und (B) sowie weitere Komponenten des Beschichtungsmittels**

Die Gewichtsanteile des Polyols (A) und der Mischung aus dem silanisierten Polyisocyanat (B1) plus dem uretdiongruppenhaltigen Polyisocyanat (B2) werden vorzugsweise solchermaßen gewählt, dass das molare Äquivalentverhältnis der nicht umgesetzten Isocyanatgruppen der isocyanathaltigen Verbindungen (B1) plus (B2) zu den Hydroxylgruppen der hydroxylgruppenhaltigen Verbindungen (A) zwischen 0,8:1 und 1:1,2, bevorzugt zwischen 0,9:1 und 1,1:1, besonders bevorzugt zwischen 0,95:1 und 1,05:1, liegt.

Bevorzugt werden erfindungsgemäß Beschichtungsmittel:eingesetzt, die von 5 bis 95 Gew.-%, bevorzugt von 20 bis 70 Gew.-%, jeweils bezogen auf den Feststoffgehalt des Beschichtungsmittel, mindestens eines hydroxylgruppenhaltigen Polyacrylates (A) und/oder mindestens eines hydroxylgruppenhaltigen Polymethacrylates (A) enthalten.

Ebenfalls bevorzugt werden erfindungsgemäß Beschichtungsmittel eingesetzt, die von 5 bis 95 Gew.-%, bevorzugt von 30 bis 80 Gew.-%, jeweils bezogen auf den Feststoffgehalt des Beschichtungsmittels, der Mischung aus der isocyanatgruppenhaltigen Verbindung (B1) plus der isocyanatgruppenhaltigen Verbindung (B2) enthalten.

Handelt es sich um einkomponentige Beschichtungsmittel, so werden die isocyanatgruppenhaltigen Verbindungen (B1) und (B2) gewählt, deren freie Isocyanatgruppen mit Blockierungsmitteln blockiert sind. Beispielsweise können die Isocyanatgruppen mit substituierten Pyrazolen, insbesondere mit Alkylsubstituierten Pyrazolen, wie 3-Methylpyrazol, 3,5-Dimethylpyrazol, 4-Nitro-3,5-dimethypyrazol, 4-Bromo-3,5-dimethylpyrazol u. Ä. blockiert werden. Besonders bevorzugt werden die Isocyanatgruppen der Komponenten (B1) und (B2) mit 3,5-Dimethylpyrazol blockiert.

Bei den erfindungsgemäß bevorzugten 2-komponentigen (2K) Beschichtungsmitteln wird kurz vor der Applikation des Beschichtungsmittel eine Lackkomponente, enthaltend die hydroxylgruppenhaltige Verbindung (A) sowie weitere nachfolgend beschriebene Komponenten, mit einer weiteren Lackkomponente, enthaltend die isocyanatgruppenhaltigen Verbindungen (B1) und (B2) sowie gegebenenfalls weitere der nachfolgend beschriebenen Komponenten in an sich bekannter Weise vermischt, wobei in der Regel die Lackkomponente, die die Verbindung (A) enthält, den Katalysator sowie einen Teil des Lösemittels enthält.

Die erfindungsgemäßen Beschichtungsmittel können ggf. außer der hydroxylgruppenhaltigen Komponente (A) noch ein oder mehrere, von der Komponente (A) verschiedene, hydroxylgruppenhaltige Verbindungen (C) enthalten. Bevorzugt nehmen diese Verbindungen (C) einen Anteil von 10 bis 50 Gew.-% besonders bevorzugt von 20 bis 40 Gew.-%, bezogen auf den nicht flüchtigen Anteil der Polyolkomponente (A) + (C), ein.

Als hydroxylgruppenhaltige Verbindung (C) werden sowohl niedermolekulare Polyole als auch von der Komponente (A) verschiedene, oligo- und/oder polymere Polyole eingesetzt.

Als niedermolekulare Polyole werden beispielsweise Diole, wie bevorzugt Ethylenglykol, Neopentylglykol, 1,2,-Propandiol, 2,2,-Dimethyl-1,3-Propandiol,1,4-Butandiol, 1,3-Butandiol, 1,5,-Pentandiol, 2,2,4-Trimethyl-1,3-pentandiol, 1,6-Hexandiol, 1,4-Cyclohexandimethanol und 1,2-Cyclohexandimethanol, sowie Polyole, wie bevorzugt Trimethylolethan, Trimethylolpropan, Trimethylolhexan, 1,2,4-Butantriol, Pentaerythritol sowie Dipentaerythritol, eingesetzt.

Bevorzugt werden solche niedermolekularen Polyole in untergeordneten Anteilen der Polyolkomponente (A) beigemischt.

Als oligo- und/oder polymere Polyole (C) werden beispielsweise Polyesterpolyole, Polyurethanpolyole und Polysiloxanpolyole eingesetzt, wenn die Komponente (A) ausschließlich aus Polyacrylatpolyolen und/oder Polymethacrylatpolyolen besteht.

### Katalysator (D)

Die erfindungsgemäßen Beschichtungsmittel enthalten bevorzugt mindestens einen Katalysator (D) für die Vernetzung der Silangruppen. Beispiele sind Metallkomplexe mit Chelatliganden auf der Basis von Zink oder Aluminium, wie die z.B. in der WO05/03340 beschriebenen Titanate oder Lewis-Säuren, wobei aber bei der Auswahl der Katalysatoren darauf zu achten ist, dass die Katalysatoren nicht zu einer Vergilbung der Beschichtungsmittel führen. Außerdem sind einige bekanntermaßen eingesetzte Katalysatoren aus toxikologischen Gründen weniger erwünscht.

Es ist daher bevorzugt, dass als Katalysator (D) phosphorhaltige, insbesondere phosphorhaltige und stickstoffhaltige Katalysatoren eingesetzt werden. Dabei können auch Mischungen aus zwei oder mehreren verschiedenen Katalysatoren (D) eingesetzt werden.

Beispiele für geeignete phosphorhaltige Katalysatoren (D) sind substituierte Phosphonsäurediester und Diphosphonsäurediester, vorzugsweise aus der Gruppe, bestehend aus acyclischen Phosphonsäurediestern, cyclischen Phosphonsäurediestern, acyclischen Diphosphonsäurediestern und cyclischen Diphosphonsäurediestern. Derartige Katalysatoren sind beispielsweise in der deutschen Patentanmeldung DE-A-102005045228 beschrieben.

Insbesondere werden aber substituierte Phosphorsäuremonoester und Phosphorsäurediester, vorzugsweise aus der Gruppe, bestehend aus acyclischen Phosphorsäurediestern und cyclischen Phosphorsäurediestern, besonders bevorzugt Aminaddukte der Phosphorsäure-mono- und - di-ester, eingesetzt.

Ganz besonders bevorzugt werden als Katalysator (D) die entsprechenden aminblockierten Phosphorsäureester, und hier insbesondere aminblockierte Phosphorsäureethylhexylester und aminblöckierte Phosphorsäurephenylester, ganz besonders bevorzugt aminblockierte Phosphorsäure-bis(2-ethylhexyl)ester eingesetzt.

Als Beispiele für Amine, mit welchem die Phosphorsäureester blockiert werden, sind insbesondere tertiäre Amine, beispielsweise bicyclische Amine, wie z. B. Diazabicyclootan (DABCO), Diazabicyclononen (DBN), Diazabicycloundecen (DBU), Dimethyldodecylamin oder Triethylamin, zu nennen. Besonders bevorzugt werden zur Blockierung der Phosphorsäureester tertiäre Amine eingesetzt, die eine gute Wirksamkeit des Katalysators bei den Härtungsbedingungen von 140 °C gewährleisten.

Bestimmte, mit Amin blockierte Phosphorsäurekatalysatoren sind auch kommerziell erhältlich (z.B. Nacure-Typen der Fa. King Industries). Beispielsweise sei der unter der Bezeichnung Nacure 4167 von der Firma King Industries als besonders geeigneter Katalysator auf der Basis eines aminblockierten Phosphorsäureteilesters genannt.

Die Katalysatoren werden vorzugsweise in Anteilen von 0,01 bis 20 Gew.-%, besonders bevorzugt in Anteilen von 0,1 bis 10 Gew.-%, bezogen auf die nicht flüchtigen Bestandteile des erfindungsgemäßen Beschichtungsmittels, eingesetzt. Eine geringere Wirksamkeit des Katalysators kann dabei durch entsprechend höhere Einsatzmengen teilweise kompensiert werden.

Die erfindungsgemäßen Beschichtungsmittel können noch einen weiteren Amin-Katalysator auf Basis eines bicyclischen Amins, insbesondere eines ungesättigten bicyclischen Amins, enthalten. Beispiele für geeignete AminKatalysatoren sind 1,5-Diazabicyclo[4.3.0]non-5-en oder 1,8-Diazabicyclo[5.4.0]undec-7-en.

Diese Amin-Katalysatoren werden vorzugsweise in Anteilen von 0,01 bis 20 Gew.-%, besonders bevorzugt in Anteilen von 0,1 bis 10 Gew.-%, bezogen auf die nicht flüchtigen Bestandteile des erfindungsgemäßen Beschichtungsmittels, eingesetzt.

Als Lösemittel für die erfindungsgemäßen Beschichtungsmittel sind insbesondere solche geeignet, die im Beschichtungsmittel chemisch inert gegenüber den Verbindungen (A), (B) und ggf. (C) sind und die auch bei der Härtung des Beschichtungsmittels nicht mit (A) und (B) reagieren. Beispiele für solche Lösemittel sind aliphatische und/oder aromatische Kohlenwasserstoffe wie Toluol, Xylol, Solventnaphtha, Solvesso 100 oder Hydrosol ® (Fa. ARAL), Ketone, wie Aceton, Methylethylketon oder Methylamylketon, Ester, wie Ethylacetat, Butylacetat, Pentylacetat oder Ethylethoxypropionat, Ether oder Mischungen aus den vorgenannten Lösemitteln. Bevorzugt weisen die aprotischen Lösemittel oder Lösemittelgemische einen Wassergehalt von maximal 1 Gew.-%, besonders bevorzugt maximal 0,5 Gew.-%, bezogen auf das Lösemittel, auf.

Neben den Verbindungen (A), (B) und ggf. (C) können noch weitere Bindemittel (E) eingesetzt werden, welche vorzugsweise mit den Hydroxylgruppen des Poly(meth)acrylates (A) und/oder mit den freien Isocyanatgruppen der Verbindung (B) und/oder mit den Alkoxysilylgruppen der Verbindungen (B) und/oder (C) reagieren und Netzwerkpunkte ausbilden können.

Beispielsweise sind als Komponente (E) Aminoplastharze und/oder Epoxydharze verwendbar. Es kommen die üblichen und bekannten Aminoplastharze in Betracht, deren Methylol- und/oder Methoxymethylgruppen teilweise mittels Carbamat- oder Allophanatgruppen defunktionalisiert sein können. Vernetzungsmittel dieser Art werden in den Patentschriften US-A-4 710 542 und EP-B-0 245 700 sowie in dem Artikel von B. Singh und Mitarbeiter "Carbamylmethylated Melamines, Novel Crosslinkers for the Coatings Industry" in Advanced Organic Coatings Science and Technology Series, 1991, Band 13, Seiten 193 bis 207, beschrieben.

In der Regel werden solche Komponenten (E) in Anteilen von bis zu 40 Gew.-%, bevorzugt von bis zu 30 Gew.-%, besonders bevorzugt von bis zu 25 Gew.-%, bezogen auf die nichtflüchtigen Bestandteile des Beschichtungsmittels, eingesetzt.

Darüber hinaus kann die erfindungsgemäße Bindemittelmischung bzw. das erfindungsgemäße Beschichtungsmittel mindestens ein übliches und bekanntes Lackadditiv (F) in wirksamen Mengen, d.h. in Mengen vorzugsweise bis zu 30 Gew.-%, besonders bevorzugt bis zu 25 Gew.-% und insbesondere bis zu 20 Gew.-%, jeweils bezogen auf die nichtflüchtigen Bestandteile des Beschichtungsmittels, enthalten.

Beispiele geeigneter Lackadditive (F) sind:

- insbesondere UV-Absorber;
- insbesondere Lichtschutzmittel wie HALS-Verbindungen, Benztriazole oder Oxalanilide;
- Radikalfänger;
- Slipadditive;
- Polymerisationsinhibitoren;
- Entschäumer;
- Reaktivverdünner, wie sie aus dem Stand der Technik allgemein bekannt sind, welche bevorzugt inert gegenüber den - Si(OR)3-Gruppen sind.
- Netzmittel wie Siloxane, fluorhaltige Verbindungen, Carbonsäurehalbester, Phosphorsäureester, Polyacrylsäuren und deren Copolymere oder Polyurethane;
- Haftvermittler wie Tricyclodecandimethanol;
- Verlaufmittel;
- filmbildende Hilfsmittel wie Cellulose-Derivate;
- Füllstoffe wie beispielsweise Nanopartikel auf der Basis von Siliziumdioxid, Aluminiumoxid oder Zirkoniumoxid; ergänzend wird noch auf das Römpp Lexikon »Lacke und Druckfarben« Georg Thieme Verlag, Stuttgart, 1998, Seiten 250 bis 252, verwiesen;

- rheologiesteuernde Additive, wie die aus den Patentschriften WO 94/22968, EP-A-0 276 501, EP-A-0 249 201 oder WO 97/12945 bekannten Additive; vernetzte polymere Mikroteilchen, wie sie beispielsweise in der EP-A-0 008 127 offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile®; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid-oder Ethylen-Maleinsäure-anhydrid-Copolymere und ihre Derivate oder hydrophob modifizierte ethoxylierte Urethane oder Polyacrylate;
- Flammschutzmittel und/der
- Wasserfänger.

In einer weiteren Ausführungsform der Erfindung kann die erfindungsgemäße Bindemittelmischung bzw. das erfindungsgemäße Beschichtungsmittel noch weitere Pigmente und/oder Füllstoffe enthalten und zur Herstellung pigmentierter Topcoats dienen. Die dafür eingesetzten Pigmente und/oder Füllstoffe sind dem Fachmann bekannt.

Da die aus den erfindungsgemäßen Beschichtungsmitteln hergestellten erfindungsgemäßen Beschichtungen auch auf bereits ausgehärteten Elektrotauchlackierungen, Füllerlackierungen, Basislackierungen oder üblichen und bekannten Klarlackierungen hervorragend haften, eignen sie sich neben dem Einsatz in der Automobilserien(OEM)lackierüng ausgezeichnet für die Autoreparaturlackierung und/oder für die Beschichtung von Automobilanbauteilen oder die modulare Kratzfestäusrüstung von bereits lackierten Automobilkarosserien.

Die Applikation der erfindungsgemäßen Beschichtungsmittel kann durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder -anlage bewegt wird. Indes kann auch das zu beschichtende Substrat, insbesondere ein Coil, bewegt werden, wobei die Applikationsanlage relativ zum Substrat ruht oder in geeigneter Weise bewegt wird.

Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air-Heißspritzen.

Die Aushärtung der applizierten erfindungsgemäßen Beschichtungsmittel kann nach einer gewissen Ruhezeit erfolgen. Die Ruhezeit dient beispielsweise zum Verlauf und zur Entgasung der Lackschichten oder zum Verdunsten von flüchtigen Bestandteilen wie Lösemittel. Die Ruhezeit kann durch die Anwendung erhöhter Temperaturen und/oder durch eine reduzierte Luftfeuchte unterstützt und/oder verkürzt werden, sofern hierbei keine Schädigungen oder Veränderungen der Lackschichten eintreten, etwa eine vorzeitige vollständige Vernetzung.

Die thermische Härtung der Beschichtungsmittel weist keine methodischen Besonderheiten auf, sondern erfolgt nach den üblichen und bekannten Methoden wie Erhitzen in einem Umluftofen oder Bestrahlen mit IR-Lampen. Hierbei kann die thermische Härtung auch stufenweise erfolgen. Eine weitere bevorzugte Härtungsmethode ist die Härtung mit nahem Infrarot (NIR-Strahlung).

Vorteilhafterweise erfolgt die thermische Härtung bei einer Temperatur von 30 bis 200°C, besonders bevorzugt 40 bis 190°C und insbesondere 50 bis 180°C während einer Zeit von 1 min bis zu 10 h, besonders bevorzugt 2 min bis zu 5 h und insbesondere 3 min bis 3 h, wobei bei den für die Automobilreparaturlackierung und für die Lackierung von Kunststoffteilen angewandten Temperaturen, die bevorzugt zwischen 30 und 90°C liegen, auch längere Härtzeiten zur Anwendung kommen können.

Die erfindungsgemäßen Beschichtungsmittel weisen einen hohen Feststoffgehalt auf und liefern neue gehärtete Beschichtungen, insbesondere Lackierungen, speziell Klarlackierungen, Formteile, speziell optische Formteile, und freitragende Folien, die hoch kratzfest sind, wobei die hohe Kratzfestigkeit auch nach einer Langzeitbelastung bestehen bleibt. Gleichzeitig weisen die erfindungsgemäß erhaltenen Beschichtungen auch eine gute Zwischenschichthaftung und einen sehr guten optischen Gesamteindruck auf. Schließlich lassen sich die erfindungsgemäßen Beschichtungen und Lackierungen, speziell die Klarlackierungen, auch in Schichtdicken > 40 $\mu$m herstellen, ohne dass Spannungsrisse auftreten.

Die erfindungsgemäßen Beschichtungsmittel eignen sich daher hervorragend als dekorative, schützende und/oder effektgebende, hoch kratzfeste Beschichtungen und Lackierungen von Karosserien von Fortbewegungsmitteln (insbesondere Kraftfahrzeuge, wie Motorräder, Busse, LKW oder PKW) oder von Teilen hiervon; von Bauwerken im Innen- und Außenbereich; von Möbeln, Fenstern und Türen; von Kunststoffformteilen, insbesondere CDs und Fenster; von industriellen Kleinteilen, von Coils, Containern und Emballagen; von weißer Ware; von Folien; von optischen, elektrotechnischen und mechanische Bauteilen sowie von Glashohlkörpern und Gegenständen des täglichen Bedarfs.

Insbesondere werden die erfindungsgemäßen Beschichtungsmittel und Lackierungen, insbesondere die Klarlackierungen, in dem technologisch und ästhetisch besonders anspruchsvollen Gebiet der Automobilserienlackierung (OEM) und zur Beschichtung von Kunststoff-Anbauteilen für Pkw-Karosserien, insbesondere für Karosserien von Pkw der Oberklasse, wie z. B. für die Herstellung von Dächern, Heckklappen, Motorhauben, Kotflügeln, Stoßstangen, Spoilern, Schwellern, Schutzleisten, seitlichen Verkleidungen u.Ä., sowie der Automobilreparaturlackierung eingesetzt.

Die Kunststoffteile bestehen üblicherweise aus ASA, Polycarbonaten, Blends aus ASA und Polycarbonaten, Polypropylen, Polymethylmethacrylaten oder schlagzäh modifizierte Polymethylmethacrylaten, insbesondere aus Blends aus ASA und Polycarbonaten, bevorzugt mit einem Polycarbonatanteil > 40%, insbesondere > 50%, verwendet.

Unter ASA werden dabei im Allgemeinen schlagzähmodifizierte Styrol/Acrylnitril-Polymerisate verstanden, bei denen Pfropfcopolymerisate von vinylaromatischen Verbindungen, insbesondere Styrol, und von Vinylcyaniden, insbesondere Acrylnitril, auf Polyalkylacrylatkautschuken in einer Copolymermatrix aus insbesondere Styrol und Acrylnitril, vorliegen.

Besonders bevorzugt werden die erfindungsgemäßen Beschichtungsmittel in mehrstufigen Beschichtungsverfahren eingesetzt, insbesondere bei Verfahren, bei dem auf ein gegebenenfalls vorbeschichtetes Substrat zunächst eine pigmentierte Basislackschicht und danach eine Schicht mit den erfindungsgemäßen Beschichtungsmittel aufgetragen werden. Gegenstand der Erfindung sind daher auch effekt- und/oder farbgebende Mehrschichtlackierurigen aus mindestens einer pigmentierten Basislackschicht und mindestens einer darauf angeordneten Klarlackschicht, die dadurch gekennzeichnet sind, dass die Klarlackschicht aus dem erfindungsgemäßen Beschichtungsmittel hergestellt worden ist.

Es können sowohl wasserverdünnbare Basislacke als auch Basislacke auf Basis von organischen Lösemitteln eingesetzt werden. Geeignete Basislacke sind beispielsweise in der EP-A-0 692 007 und in den dort in Spalte 3, Zeilen 50ff. angeführten Dokumenten beschrieben. Bevorzugt wird der aufgebrachte Basislack zunächst getrocknet, das heißt dem Basislackfilm wird in einer Abdunstphase wenigstens ein Teil des organischen Lösemittels beziehungsweise des Wassers entzogen. Die Trocknung erfolgt vorzugsweise bei Temperaturen von Raumtemperatur bis 80°C. Nach der Trocknung wird das erfindungsgemäße Beschichtungsmittel aufgebracht. Anschließend wird die Zweischichtlackierung bevorzugt unter bei der Automobilserienlackierung angewandten Bedingungen bei Temperaturen von 30 bis 200°C, besonders bevorzugt 40 bis 190°C und insbesondere 50 bis 180°C, während einer Zeit von 1 min bis zu 10 h, besonders bevorzugt 2 min bis zu 5 h und insbesondere 3 min bis 3 h, eingebrannt, wobei bei den für die Automobilreparaturlackierung angewandten Temperaturen, die bevorzugt zwischen 30 und 90°C liegen, auch längere Härtzeiten zur Anwendung kommen können.

In einer weiteren bevorzugten Ausführungsform der Erfindung wird das erfindungsgemäße Beschichtungsmittel als transparenter Klarlack zur Beschichtung von Kunststoffsubstraten, insbesondere von Kunststoff-Anbauteilen, eingesetzt. Die Kunststoffanbauteile werden bevorzugt ebenfalls in einem mehrstufigen Beschichtungsverfahren beschichtet, bei dem auf ein gegebenenfalls vorbeschichtetes oder ein zur besseren Haftung der nachfolgenden Beschichtungen vorbehandeltes Substrat (z.B. Beflammen, Corona- oder Plasma-Behandlung des Substrats) zunächst eine pigmentierte Basislackschicht und danach eine Schicht mit den erfindungsgemäßen Beschichtungsmittel aufgetragen werden.

Schließlich wird das erfindungsgemäße Beschichtungsmittel als transparenter Klarlack zur Beschichtung von transparenten Kunststoffsubstraten eingesetzt. In diesem Fall beinhalten die Beschichtungsmittel UV-Absorber, die in Menge und Art auch auf den wirksamen UV-Schutz des Kunststoffsubstrats ausgelegt sind.

**Beispiele**

**Herstellung eines Poly(meth)acrylatharzes mit Hydroxylgruppen (A1)**

In einem, mittels Ölumlaufthermostat beheizbaren, doppelwandigen 4-I Edelstahlkessel, ausgestattet mit Thermometer, Ankerrührer, 2 Tropftrichtern und Rückflußkühler wird Lösungsmittel zur Polymerisation vorgelegt. In einem der Tropftrichter wird die Monomerenmischung, in dem zweiten Tropftrichter die Intiatorlösung, enthaltend einen geeigneten Initiator (i.d.R. ein Peroxid), vorgelegt. Die Vorlage wird auf eine Polymerisationstemperatur von 140°C aufgeheizt. Nach Erreichen der Polymerisationstemperatur wird zunächst der Initiatorzulauf gestartet. 15 Minuten nach Beginn des Initiatorzulaufes wird der Monomerenzulauf (Dauer 240 Minuten) gestartet. Der Initiatorzulauf wird so eingestellt, dass er nach Beendigung des Monomerenzulaufs noch weitere 30 Minuten nachläuft. Nach Beendigung des Initiatorzulaufes wird die Mischung für weitere 2h bei 140°C gerührt und anschließend auf Raumtemperatur abgekühlt. Anschließend wird die Reaktionsmischung mit Lösemittel auf den in 2 angegebenen Feststoffgehalt eingestellt.

Tabelle 1: Zusammensetzung des Polymethacrylates (A1) in Gew.-Teilen

| Komponente | Gew.-Tl. |
|---|---|
| Styrol | 8,0 |
| n-Butylmethacrylat | 8,0 |
| Acrylsäure | 0,6 |

(fortgesetzt)

| Komponente | Gew.-Tl. |
|---|---|
| 4-Hydroxybutylacrylat | 12,0 |
| 2-Hydroxyethylacrylat | 12,0 |
| n-Butylacrylat | 19,0 |

Tabelle 2: Kennzahlen des Polymethacrylates (A1) (Säurezahl und Viskosität experimentell bestimmt, OH-Zahl und Tg theoretisch berechnet)

| Festkörper 1h 150°C | 65% |
|---|---|
| Säurez. (gemessen) [mg KOH/g] | 8-12 |
| OH-Zahl berechnet [mg KOH/g] | 175 |
| Tg (FOX) [°C] | -27 |
| Viskosität [mPa.s] [1] | 2200 |
| [1] Bestimmt bei Raumtemperatur nach DIN53229 mit einem Kegel-Platte-Viskosimeter der Firma Brookfield, Kegel 3 | |

**Herstellung eines vollsilanisierten Polyisocyanurates (B1-1) (HDI mit 20 mol-% Monosilan-Struktureinheiten (II) und 80 mol-% Bissilan-Struktureinheiten (III) : Umsetzungsgrad c = 100 mol-%)**

In einem Stahlreaktor, ausgestattet mit einem Rückflusskühler und einem Thermometer, werden 31 Teile trimerisiertes, Isocyanuratgruppen aufweisendes Hexamethylendiisocyanat (HDI) (Desmodur N3600 Firma Bayer), 17 Teile Butylacetat und 3 Teile Triethylorthoformiat vorgelegt. Über einen Tropftrichter wird anschließend ein Gemisch aus 37 Teilen Bis-[3-(trimethoxysilyl)propyl]amin (Dynasylan 1124, EVONIK, Rheinfelden) und 12 Teilen Trimethoxysilylpropyl-N-Butylamin (Dynasilan 1189, EVONIK, Rheinfelden) unter Stickstoffüberschleierung und Rühren zugetropft. Es ist ein leichter Temperaturanstieg auf ca. 40°C zu beobachten. Nach 2-stündigem Rühren wird der NCO-Wert titrimetrisch überprüft.
nicht flüchtiger Anteil (1 h, 150°C): 80%,
NCO-Gehalt: 0% (Lsg.)

Herstellung einer Lösung eines uretdiongruppenhaltigen Isocyanates (B2) 200 Gewichtsteile eines handelsüblichen dimerisierten, Uretdiongruppen aufweisenden Polyisocyanates auf Basis Hexamethylendiisocyanat (Desmodur® N3400 Firma Bayer) und 50 Teile Butylacetat werden durch Rühren miteinander vermischt, so dass eine Lösung mit einem Festkörpergehalt von 80,0 Gew.-% erhalten wird.

**Herstellung eines teilsilanisierten Polyisocyanurates (B1-2) auf Basis von HDI basiertem Isocyanurat (10 mol-% Monosilanstrukturen IIa und 90 mol-% Bissilanstrukturen IIIa: Umsetzungsgrad der Isocyanatgruppen c = 40 mol-% )**

In einem Stahlreaktor, ausgestattet mit einem Rückflusskühler und einem Thermometer, werden 57,6 Teile trimerisiertes Hexamethylendiisocyanat (HDI) (Desmodur N3600 Firma Bayer), 14,8 Teile Butylacetat und 2,8 Teile Triethylorthoformiat vorgelegt. Über einen Tropftrichter wird anschließend ein Gemisch aus 39,4 Teilen Bis-[3-(trimethoxysilyl)propyl]amin (Dynäsylan 1124, EVONIK, Rheinfelden) und 3,0 Teilen Trimethoxysilylpropyl-N-Butylamin (Dynasilan 1189, EVONIK, Rheinfelden) unter Stickstoffüberschleierung und Rühren zugetropft. Es ist ein leichter Temperaturanstieg auf ca. 40°C zu beobachten. Nach 2-stündigem Rühren wird der NCO-Wert titrimetrisch überprüft: NCO-Gehalt: 6,6% (Lösung)
nicht flüchtiger Anteil (1 h, 150°C): 85%,

Durch Vermischen der in Tabelle 3 angegebenen Mengen des silanisierten Polyisocyanurates (B1-1) bzw. (B1-2) und des uretdiongruppenhaltigen Isocyanates (B2) werden die in Tabelle 3 aufgeführten Härtermischungen H 1 bis H3 sowie HV1 hergestellt.

Tabelle 3. Zusammensetzung der Härtermischungen H1 bis H3 und HV1 in Gewichtsteilen sowie Festkörpergehalt, Isocyanatgehalt und Viskosität

| Härtermischung | Uretdion B2 | Isocyanurat B1-1 | Isocyariurat B1-2 | B2:B1 in Gewichts-% | Isocyanat-gehalt der Mischung [%] | Festkörper der Mischung [%] | Viskosität der Mischung [mPa.s] |
|---|---|---|---|---|---|---|---|
| H1 | 75 | 25 | | 75:25 | 13,2 | 80 | 55 |
| H2 | 50 | 50 | | 50:50 | 8,8 | 80 | 104 |
| H3 | 25 | 75 | | 25:75 | 4,4 | 80 | 246 |
| HV1 | -- | -- | 100 | -- | 6,6 | 85 | -- |

**Berechnung der Mischungsverhältnisse der uretdiongruppenhaltigen Verbindung B2 zu der silangruppenhaltigen Verbindung B1 in Äquivalenten für die Härtermischungen H1 bis H3 und HV1**

Berechnung des Äquivalentgewichtes Desmodur® N3400 gemäß technischem Merkblatt: (100 * 42 g) /21,8 = 193 g

Berechnung des Äquivalentgewichtes Desmodur® N3600 gemäß technischem Merkblatt: (100 * 42 g) / 23 = 183 g

Berechnetes Äquivalentgewicht Bis-[3-(trimethoxysilyl)propyl]amin: 341 g

Berechnetes Äquivalentgewicht Trimethoxysilylpropyl-N-butylamin: 234 g

**Berechnung des Äquivalentgewichtes für die uretdiongruppenhaltige Verbindung B2:**

Umsetzungsgrad c′ in B2 zu Silaneinheiten: 0 mol-%

Anteil as'2 in B2 der mit Monosilan umgesetzten Isocyanatgruppen: (Menge Monosilan in Mol-%) / [Gesamtanteil (Monosilan + Bissilan) = 100 Mol-%] = 0

Anteil as 3 in B2 der mit Bissilan umgesetzten Isocyanatgruppen:

(Menge Bissilan in Mol-%) / [Gesamtanteil (Monosilan + Bissilan) = 100 Mol-%] = 0

Äquivalentgewicht für die uretdiongruppenhaltige Verbindung B2: [193 g (Äquivalentgewicht Desmodur® N3400)] + 0*[(0*234 g) + (0*341 g)] = 193 g

**Berechnung des Äquivalentgewichtes für die silangruppenhaltige Verbindung B1-1:**

Umsetzungsgrad c in B1-1 zu Silaneinheiten: 100mol-% / 100mol-% = 1,0

Anteil as2 in B1-1 der mit Monosilan umgesetzten Isocyanatgruppen: (Menge Monosilan in Mol-%) /[Gesamtanteil (Monosilan + Bissilan) = 100 Mol-%] = 20 mol-% / 100 mol-% = 0,2

Anteil as3 in B1-1 der mit Bissilan umgesetzten Isocyanatgruppen:

(Menge Bissilan in Mol-%) / [Gesamtanteil (Monosilan + Bissilan) = 100 Mol-%] = 80 mol-% / 100 mol-% = 0,8

Äquivalentgewicht für die silangruppenhaltige Verbindung B1-1:

[183 g (Äquivalentgewicht Desmodur® N3600)] + 1;0*[(0,2*234 g) + (0,8*341 g)] = 183 g + (1,0)*[46,8 g + 272,8 g] = 502,6 g

**Berechnung des Äquivalentgewichtes für die silangruppenhaltige Verbindung B1-2:**

Umsetzungsgrad c in B1-2 zu Silaneinheiten: 40 mol-% /100mol-% = 0,4

Anteil as2 in B1-2 der mit Monosilan umgesetzten Isocyanatgruppen: (Menge Monosilan in Mol-%) / [Gesamtanteil (Monosilan + Bissilan) = 100 Mol-%] = 10 mol-% /100 mol-% = 0,1

Anteil as3 in B1-2 der mit Bissilan umgesetzten Isocyanatgruppen:

(Menge Bissilan in Mol-%) / [Gesamtanteil (Monosilan + Bissilan) = 100 Mol-%] = 90 mol-% / 100 mol-% = 0,9

Äquivalentgewicht für Isocyanurat B1-2:

[183 g (Äquivalentgewicht Desmodur® N3600)] + 0,4*[(0,1*234 g) + (0,9*341 g)] = 183 g + (0,4)*[23,4 g + 306,9 g] = 315,1 g

Berechnung des Mischungsverhältnisses der Härtermischung H1 (75 Gew.-Teile Verbindung B2 und 25 Gew.-Teile Verbindung B1-1) in Äquivalenten B2 zu Äquivalenten B1-1: 7,8 : 1,0

$$\frac{\text{Äquivalente B2}}{\text{Äquivalente B1-1}} = \frac{75/193}{25/502,6} = \frac{75*502,6}{25*193} = \frac{7,8}{1,0}$$

Berechnung des Mischungsverhältnisses der Härtermischung H2 (50 Gew.-Teile Verbindung B2 und 50 Gew.-Teile Verbindung B1-1) in Äquivalenten B2 zu Äquivalenten B1-1: 2,6 : 1,0

$$\frac{\text{Äquivalente B2}}{\text{Äquivalente B1-1}} = \frac{50/193}{50/502,6} = \frac{50*502,6}{50*193} = \frac{2,6}{1,0}$$

Berechnung des Mischungsverhältnisses der Härtermischung H3 (25 Gew.-Teile Verbindung B2 und 75 Gew.-Teile Verbindung B1-1) in Äquivalenten B2 zu Äquivalenten B1-1: 0,87 : 1,0

$$\frac{\text{Äquivalente B2}}{\text{Äquivalente B1-1}} = \frac{25/193}{75/502,6} = \frac{25*502,6}{75*193} = \frac{0,87}{1,0}$$

Berechnung des Mischungsverhältnisses der Härtermischung HV1 (100 Gew.-Teile Verbindung B1-2) **in Äquivalenten B2 zu Äquivalenten B1-2: 0**

$$\frac{\text{Äquivalente B2}}{\text{Äquivalente B1-2}} = \frac{0/193}{100/315} = \frac{0*315}{100*193} = \frac{0}{1,0}$$

Formulierung der erfindungsgemäßen Beschichtungsmittel B1 bis B3 und des Beschichtungsmittels VB1 sowie der entsprechenden Beschichtungen der Beispiele 1 bis 3 und des Vergleichsbeispiels V1

In angegebener Reihenfolge (von oben beginnend) werden die in Tabelle 4 angegebenen Bestandteile in einem geeigneten Gefäß innig miteinander vermengt und unmittelbar im Anschluss auf ein mit schwarzem Basislack lackierten Spiegelblech auflackiert (Basislacktrocknung 30 min bei 80°C, 10 min Ablüftzeit). Anschließend werden die Bleche bei 60°C 30 Minuten lang im Ofen getrocknet. Die erhaltenen Beschichtungen werden 24h bei Raumtemperatur gelagert und mit einem Wave-Scan® der Firma BYK-Gardner vermessen. Die Prüfergebnisse sind in Tabelle 5 dargestellt.

Tabelle 4: Zusammensetzung der erfindungsgemäßen Beschichtungsmittel B1 bis B3 sowie des Vergleichsbeispiels VB1, jeweils auf Basis des hydroxylgruppenhaltigen Polymethacrylates (A1)

| | Beispiel B1 | Beispiel B2 | Beispiel B3 | Vergleichsbeispiel VB1 |
|---|---|---|---|---|
| Polyacrylat (A1) | 95 | 95 | 95 | 80 |
| Byk 333 [1] | 0,4 | 0,4 | 0,4 | 0,4 |
| Tinuvin® 384 [2] | 1,0 | 1,0 | 1,0 | 1,0 |
| Tinuvin® 292 [3] | 1,0 | 1,0 | 1,0 | 1,0 |
| Nacure 4167® [4] | 2,6 | 2,6 | 2,6 | 2,4 |
| Härter H1 | 60 | | | |
| Härter H2 | | 90 | | |
| Härter H3 | | | 175 | |
| Härter HV1 | | | | 100 |
| nicht flüchtiger Anteil (1h, 150°C) | 70,6% | 72,1% | 74,5% | 70,0% |
| Butylacetat | 1 | 5 | 8 | -- |

(fortgesetzt)

|  | Beispiel B1 | Beispiel B2 | Beispiel B3 | Vergleichsbeispiel VB1 |
|---|---|---|---|---|
| nicht flüchtiger Anteil (1h, 150°C) | 70% | 70% | 70% | 70% |

1) Byk 333 = handelsübliches, oberflächenaktives Additiv der Firma Byk Chemie
2) Tinuvin® 384 = handelsübliches Lichtschutzmittel auf Basis eines Benztriazols der Firma Ciba
3) Tinuvin® 292 = handelsübliches Lichtschutzmittel auf Basis eines sterisch gehinderten Amins der Firma Ciba
4) Nacure® 4167 = handelsüblicher Katalysator auf Basis von aminblockiertem Phosphorsäureteilester der Firma King Industries, nicht flüchtiger Anteil 25%

Tabelle 5: Prüfergebnisse der Beschichtungen der Beispiele B1 bis B3 und des Vergleichsbeispiels VB1

|  | Schichtdicke [$\mu$m] | Short Wave | Long Wave |
|---|---|---|---|
| Basislack Blech1 ohne Klarlack | 15 | 8,1 | 2,2 |
| Klarlack B1 auf Basislack Blech1 | 40 | 5,1 | 1,1 |
|  |  |  |  |
| Basislack Blech2 ohne Klarlack | 15 | 8,0 | 2,2 |
| Klarlack B2 auf Basislack Blech2 | 40 | 3,9 | 1,2 |
|  |  |  |  |
| Basislack Blech3 ohne Klarlack | 15 | 8,0 | 2,4 |
| Klarlack B3 auf Basislack Blech3 | 40 | 4,3 | 1,8 |
| Basislack Blech4 ohne Klarlack | 15 | 8,1 | 2,6 |
| Klarlack VB1 auf Basislack Blech4 | 41 | 10,3 | 14,6 |

Alle Beschichtungen sind grifffest nach der beschriebenen Trocknung (30 Minuten bei 60°C). Eventuelles Auftreten von klebenden Filmen bei abweichenden optimalen Laborbedingungen kann einfach durch leicht erhöhte Katalysatormengen und/oder wirksamere Katalysatoren abgestellt werden.

**Zusammenfassung der Prüfergebnisse:**

Der Vergleich sowohl der Long-Wave Werte (LW) als auch der Short-Wave Werte (SW) in der Tabelle 5 zeigt, dass die erfindungsgemäßen Beispiele 1 bis 3 wesentlich bessere Long-Wave Werte (LW) und Short-Wave Werte (SW) aufweisen als das Vergleichsbeispiel V1.

Mit allen erfindungsgemäßen Härtermischungen H1 bis H3 kann also ein sehr guter Verlauf bei der Zielschicht-dicke von 40$\mu$m auch bei hohen Festkörpergehalten erzielt werden. Ferner gewährleisten alle erfindungsgemäß Beschichtungsmittel eine schnelle Aushärtung auch unter den Bedingungen der Reparaturlackierung, d.h. dass alle Beschichtungen grifffest nach der Trocknung 30 Minuten bei 60°C sind. Hierbei wird die schnelle Aushärtung insbesondere über den Anteil der Silanfunktionen, welche über das Isocyanurat B1 eingebracht werden, kontrolliert, während der Verlauf und der Festkörpergehalt der Beschichtungsmittel über den Anteil des uretdiongruppenhaltigen Isocyanates B2 eingestellt wird.

**Patentansprüche**

1. Beschichtungsmittel auf Basis aprotischer Lösemittel, enthaltend
   mindestens eine oligomere und/oder polymere hydroxylgruppenhaltige Verbindung (A),
   mindestens eine Verbindung (B1) mit mindestens einer Silangruppe der Formel (1)

$$-X-Si-R''_x G_{3-x} \qquad (I)$$

mit

G = identische oder unterschiedliche hydrolysierbare Gruppen, insbesondere G = Alkoxygruppe (OR'),

R' = Wasserstoff, Alkyl oder Cycloalkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R' = Ethyl und/oder Methyl,

X = organischer Rest, insbesondere linearer und/oder verzweigter Alkylen- oder Cycloalkylenrest mit 1 bis 20 Kohlenstoffatomen, ganz besonders bevorzugt X = Alkylenrest mit 1 bis 4 Kohlenstoffatomen,

R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R" = Alkylrest, insbesondere mit 1 bis 6 C-Atomen,

x = 0 bis 2, bevorzugt 0 bis 1, besonders bevorzugt x = 0

und

mindestens eine, von der Komponente (B1) verschiedene Verbindung (B2) mit mindestens 2 Isocyanatgruppen pro Molekül,

**dadurch gekennzeichnet, dass**

> (i) die Verbindung (B2) Uretdiongruppen aufweist und
> (ii) die Verbindung (B2) aus einem linearen, aliphatischen Diisocyanat (DI) hergestellt worden ist.

2. Beschichtungsmittel nach Anspruch 1, **dadurch gekennzeichnet, dass** die Verbindung (B2) aus einem linearen, aliphatischen Diisocyanat (D1) mit 3 bis 12 C-Atomen, insbesondere mit 4 bis 10 C-Atomen und ganz besonders bevorzugt mit 5 bis 6 C-Atomen, hergestellt worden ist.

3. Beschichtungsmittel nach Anspruch 1 oder 2, **dadurch gekennzeichnet, dass** die Verbindung (B2) einen Uretdiongruppengehalt > 50 mol-%, bevorzugt mehr als 50 bis 90 mol-%, besonders bevorzugt 65 bis 80 mol-%, jeweils bezogen auf die Gesamtheit der durch Isocyanat-Oligomerisierung des linearen aliphatischen Diisocyanates (DI) entstandenen Strukturtypen, aufweist.

4. Beschichtungsmittel nach einem der Ansprüche 1 bis 3, **dadurch gekennzeichnet, dass** in der uretdiongruppenhaltigen Verbindung (B2) weniger als 5 Mol-%, bevorzugt weniger als 2,5 Mol-% und besonders bevorzugt keine der Isocyanatgruppen zu Struktureinheiten (I), (II) und/oder (III) umgesetzt worden sind.

5. Beschichtungsmittel nach einem der Ansprüche 1 bis 4, **dadurch gekennzeichnet, dass** die Silangruppen enthaltende Verbindung (B1) Isocyanuratgruppen und/oder Allophanatgruppen aufweist und/oder dass die Silangruppen enthaltende Verbindung (B1) zusätzlich Isocyanatgruppen aufweist.

6. Beschichtungsmittel nach einem der Ansprüche 1 bis 5, **dadurch gekennzeichnet, dass** die Verbindung (B1) zwischen 0 und 100 mol-%, bevorzugt 5 bis 70 mol-%, jeweils bezogen auf die Gesamtheit der Struktureinheiten (II) und (III), mindestens einer Struktureinheit der Formel (II)

$$-NR-(X-SiR''_x(OR')_{3-x}) \qquad (II),$$

und

zwischen 0 und 100 mol-%, bevorzugt 30 bis 95 mol-%, jeweils bezogen auf die Gesamtheit der Struktureinheiten (II) und (III), mindestens einer Struktureinheit der Formel (III)

$$-N(X-SiR''_x(OR')_{3-x})_n(X'-SiR''_y(OR')_{3-y})_m \qquad (III)$$

aufweist, wobei

R = Wasserstoff, Alkyl, Cycloalkyl, Aryl oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl,

R' = Wasserstoff, Alkyl oder Cycloalkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R' = Ethyl und/oder Methyl

X, X' = linearer und/oder verzweigter Alkylen oder Cycloalkylenrest mit 1 bis 20 Kohlenstoffatomen, bevorzugt X, X' = Alkylenrest mit 1 bis 4 Kohlenstoffatomen, R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R" = Alkylrest, insbesondere mit 1 bis 6 C-Atomen,

n = 0 bis 2, m = 0 bis 2, m+n = 2 , sowie
x, y = 0 bis 2.

7. Beschichtungsmittel nach einem der Ansprüche 1 bis 6, **dadurch gekennzeichnet, dass** der Gesamtanteil der zu den Struktureinheiten (II) und/oder (III) umgesetzten Isocyanatgruppen in der Verbindung (B1) zwischen 10 und 100 mol-%, bevorzugt zwischen 30 und 100 mol-% und besonders bevorzugt zwischen 50 und 100 mol-% liegt.

8. Beschichtungsmittel nach einem der Ansprüche 1 bis 7, **dadurch gekennzeichnet, dass** die Verbindung (B1) das Umsetzungsprodukt aus (α) Bis(3-propyltrimethoxysilyl)amin und ggf. N-(3-(trimethoxysilyl)propyl)butylamin mit (β) 1,6-Hexamethylendiisocyanat, Isophorondiisocyanat, oder 4,4' - Methylendicyclohexyldiisocyanat, der Biuret-Dimeren der vorgenannten Diisocyanate und/oder der Isocyanurat-Trimeren der vorgenannten Diisocyanate ist.

9. Beschichtungsmittel nach einem der Ansprüche 1 bis 8, **dadurch gekennzeichnet, dass** das Mischungsverhältnis in Äquivalenten der uretdiongruppenhaltigen Verbindung (B2) zu Äquivalenten der silangruppenhaltigen Verbindung (B1) zwischen 0,5 zu 1,0 und 50,0 zu 1,0, bevorzugt zwischen 0,8 zu 1,0 und 20,0 zu 1,0, liegt.

10. Beschichtungsmittel nach einem der Ansprüche 1 bis 9, **dadurch gekennzeichnet, dass** die hydroxylgruppenhaltige Verbindung (A) ausgewählt ist aus der Gruppe der Polyacrylatpolyole, der Polymethacrylatpolyole, der Polyesterpolyole, der Polyurethanpolyole und/oder der Polysiloxanpolyole, insbesondere aus der Gruppe der Polyacrylatpolyole und/oder der Polymethacrylatpolyole.

11. Beschichtungsmittel nach einem der Ansprüche 1 bis 10, **dadurch gekennzeichnet, dass** es als Verbindung (A) lactanmodifizierte, bevorzugt ε - caprolactonmodifizierte, hydroxylgruppenhaltige oligomere und/oder polymere Verbindungen (A) und ganz besonders bevorzugt ε -caprolactonmodifizierte hydroxylgruppenhaltige Polyacrylatpolyole und/oder ε -caprolactonmodifizierte hydroxylgruppenhaltige Polymethacrylatpolyole enthält.

12. Mehrstufiges Beschichtungsverfahren, **dadurch gekennzeichnet, dass** auf ein gegebenenfalls vorbeschichtetes Substrat eine pigmentierte Basislackschicht und danach eine Schicht aus dem Beschichtungsmittel nach einem der Ansprüche 1 bis 11 aufgetragen wird.

13. Mehrstufiges Beschichtungsverfahren nach Anspruch 12, **dadurch gekennzeichnet, dass** nach Auftrag der pigmentierten Basislackschicht der aufgebrachte Basislack zunächst bei Temperaturen von Raumtemperatur bis 80°C getrocknet wird und nach dem Auftrag des Beschichtungsmittels nach einem der Ansprüche 1 bis 11 bei Temperaturen von 30 bis 90°C während einer Zeit von 1 min bis zu 10 h gehärtet wird.

14. Verwendung der Beschichtungsmittel nach einem der Ansprüche 1 bis 11 als Klarlack für die Automobilreparaturlackierung und/oder für die Beschichtung von Automobilanbauteilen und/oder Kunststoffsubstraten.

15. Verwendung des Verfahrens nach Anspruch 12 oder 13 für die Automobilreparaturlackierung und/oder für die Beschichtung von Kunststoffsubstraten.

**Claims**

1. Coating composition based on aprotic solvents and comprising
at least one oligomeric and/or polymeric, hydroxyl-containing compound (A),
at least one compound (B1) having at least one silane group of the formula (I)

$$-X-Si-R''_xG_{3-x} \qquad (I)$$

with
G = identical or different hydrolyzable groups, particularly G = alkoxy group (OR'),
R' = hydrogen, alkyl or cycloalkyl, it being possible for the carbon chain to be interrupted by nonadjacent oxygen, sulfur or NRa groups, with Ra = alkyl, cycloalkyl, aryl or aralkyl, preferably R' = ethyl and/or methyl,
X = organic radical, more particularly linear and/or branched alkylene or cycloalkylene radical having 1 to 20 carbon atoms, very preferably x = alkylene radical having 1 to 4 carbon atoms,
R'' = alkyl, cycloalkyl, aryl or aralkyl, it being possible for the carbon chain to be interrupted by nonadjacent oxygen, sulfur or NRa groups, with Ra = alkyl, cycloalkyl, aryl or aralkyl, preferably R'' = alkyl radical, more particularly having 1 to 6 C atoms,
x = 0 to 2, preferably 0 to 1, more preferably x = 0,
and
at least one compound (B2) which is different from the component (B1) and has at least 2 isocyanate groups per molecule,
**characterized in that**

(i) the compound (B2) contains uretdione groups, and
(ii) the compound (B2) has been prepared from a linear aliphatic diisocyanate (DI).

2. Coating composition according to Claim 1, **characterized in that** the compound (B2) has been prepared from a linear aliphatic diisocyanate (DI) having 3 to 12 C atoms, more particularly having 4 to 10 C atoms, and very preferably having 5 to 6 C atoms.

3. Coating composition according to Claim 1 or 2, **characterized in that** the compound (B2) has a uretdione group content > 50 mol%, preferably more than 50 to 90 mol%, more preferably 65 to 80 mol%, based in each case on the entirety of the structural types formed by isocyanate oligomerization of the linear aliphatic diisocyanate (DI).

4. Coating composition according to any of Claims 1 to 3, **characterized in that** less than 5 mol%, preferably less than 2.5 mol%, and more preferably none of the isocyanate groups in the uretdione-group-containing compound (B2) have undergone reaction to form structural units (I), (II) and/or (III).

5. Coating composition according to any of Claims 1 to 4, **characterized in that** the silane-group-containing compound (B1) contains isocyanurate groups and/or allophanate groups and/or **characterized in that** the silane-group-containing compound (B1) additionally contains isocyanate groups.

6. Coating composition according to any of Claims 1 to 5, **characterized in that** the compound (B1) has between 0 and 100 mol%, preferably 5 to 70 mol%, in each case based on the entirety of the structural units (II) and (III), of at least one structural unit of the formula (II)

$$-NR-(X-SiR''x(OR')3-x) \qquad (II)$$

and

between 0 and 100 mol%, preferably 30 to 95 mol%, in each case based on the entirety of the structural units (II) and (III), of at least one structural unit of the formula (III)

$$-N(X-SiR' 'x(OR')3-x)n(X'-SiR' 'y(OR')3-y)m \qquad (III)$$

where
R = hydrogen, alkyl, cycloalkyl, aryl or aralkyl, it being possible for the carbon chain to be interrupted by nonadjacent oxygen, sulfur or NRa groups, with Ra = alkyl, cycloalkyl, aryl or aralkyl,
R' = hydrogen, alkyl or cycloalkyl, it being possible for the carbon chain to be interrupted by nonadjacent oxygen, sulfur or NRa groups, with Ra = alkyl, cycloalkyl, aryl or aralkyl, preferably R' = ethyl and/or methyl,
X, X' = linear and/or branched alkylene or cycloalkylene radical having 1 to 20 carbon atoms, preferably X, X' = alkylene radical having 1 to 4 carbon atoms,
R'' = alkyl, cycloalkyl, aryl or aralkyl, it being possible for the carbon chain to be interrupted by nonadjacent oxygen, sulfur or NRa groups, with Ra = alkyl, cycloalkyl, aryl or aralkyl, preferably R'' = alkyl radical, more particularly having 1 to 6 C atoms,
n = 0 to 2, m = 0 to 2, m+n = 2, and
x, y = 0 to 2.

7. Coating composition according to any of Claims 1 to 6, **characterized in that** the total fraction of the isocyanate groups in the compound (B1) that are reacted to form the structural units (II) and/or (III) is between 10 and 100 mol%, preferably between 30 and 100 mol%, and more preferably between 50 and 100 mol%.

8. Coating composition according to any of Claims 1 to 7, **characterized in that** the compound (B1) is the reaction product of (α) bis(3-propyltrimethoxy-silyl)amine and optionally N-(3-(trimethoxysilyl)-propyl)butylamine with (β) 1,6-hexamethylene diisocyanate, isophorone diisocyanate, or 4,4'-methylenedicyclohexyl diisocyanate, the biuret dimers of the aforementioned diisocyanates and/or the isocyanurate trimers of the aforementioned diisocyanates.

9. Coating composition according to any of Claims 1 to 8, **characterized in that** the proportion in equivalents of the uretdione-group-containing compound (B2) to equivalents of the silane-group-containing compound (B1) is between 0.5:1.0 and 50.0:1.0, preferably between 0.8:1.0 and 20.0:1.0.

10. Coating composition according to any of Claims 1 to 9, **characterized in that** the hydroxyl-containing compound (A) is selected from the group of polyacrylate polyols, polymethacrylate polyols, polyester polyols, polyurethane polyols and/or polysiloxane polyols, more particularly from the group of polyacrylate polyols and/or polymethacrylate polyols.

11. Coating composition according to any of Claims 1 to 10, **characterized in that** it comprises as compound (A) lactone-modified, preferably ε-caprolactone-modified, hydroxyl-containing, oligomeric and/or polymeric compounds (A), and very preferably ε-caprolactone-modified, hydroxyl-containing polyacrylate polyols and/or ε-caprolactone-modified, hydroxyl-containing polymethacrylate polyols.

12. Multistage coating method, **characterized in that** a pigmented basecoat film is applied to an optionally precoated substrate and thereafter a layer of the coating composition according to any of Claims 1 to 11 is applied.

13. Multistage coating method according to Claim 12, **characterized in that** application of the pigmented basecoat film is followed by drying of the applied basecoat initially at temperatures from room temperature to 80°C, and application of the coating composition according to any of Claims 1 to 11 is followed by curing at temperatures from 30 to 90°C for a time of 1 minute to 10 hours.

14. Use of the coating compositions according to any of Claims 1 to 11 as a clearcoat for automotive refinish and/or for the coating of components for installation in or on automobiles, and/or of plastics substrates.

15. Use of the method according to Claim 12 or 13 for automotive refinish and/or for the coating of plastics substrates.

**Revendications**

1. Agent de revêtement à base de solvants aprotiques, contenant
au moins un composé (A) oligomère et/ou polymère contenant des groupes hydroxyle,
au moins un composé (B1) présentant au moins un groupe silane de formule (I)

$$-X-Si-R''_xG_{3-x} \qquad (I)$$

où

G = des groupes hydrolysables identiques ou différents, en particulier G = un groupe alcoxy (OR'),
R' = hydrogène, alkyle ou cycloalkyle, la chaîne carbonée pouvant être interrompue par des groupes oxygène, soufre ou $NR^a$ non adjacents, avec $R^a$ = alkyle, cycloalkyle, aryle ou aralkyle, de préférence R' = éthyle et/ou méthyle,
X = un radical organique, en particulier un radical alkylène linéaire et/ou ramifié ou cycloalkylène, comprenant 1 à 20 atomes de carbone, de manière tout particulièrement préférée X = un radical alkylène comprenant 1 à 4 atomes de carbone,
R'' = alkyle, cycloalkyle, aryle ou aralkyle, la chaîne carbonée pouvant être interrompue par des groupes oxygène, soufre ou $NR^a$ non adjacents, avec $R^a$ = alkyle, cycloalkyle, aryle ou aralkyle, de préférence R'' = un radical alkyle, comprenant en particulier 1 à 6 atomes de carbone,
x = 0 à 2, de préférence 0 à 1, de manière particulièrement préférée x = 0 et

au moins un composé (B2) différent du composant (B1) présentant au moins 2 groupes isocyanate par molécule, **caractérisé en ce que**

(i) le composé (B2) présente des groupes uretdione et
(ii) le composé (B2) a été préparé à partir d'un diisocyanate linéaire, aliphatique (DI).

**2.** Agent de revêtement selon la revendication 1, **caractérisé en ce que** le composé (B2) a été préparé à partir d'un diisocyanate linéaire, aliphatique (DI) comprenant 3 à 12 atomes de carbone, en particulier 4 à 10 atomes de carbone et de manière tout particulièrement préférée 5 à 6 atomes de carbone.

**3.** Agent de revêtement selon la revendication 1 ou 2, **caractérisé en ce que** le composé (B2) présente une teneur en groupes uretdione > 50% en mole, de préférence supérieure à 50 jusqu'à 90% en mole, de manière particulièrement préférée de 65 à 80% en mole, à chaque fois par rapport à la totalité des types de structure formés par l'oligomérisation d'isocyanate du diisocyanate linéaire aliphatique (DI).

**4.** Agent de revêtement selon l'une quelconque des revendications 1 à 3, **caractérisé en ce que**, dans le composé (B2) contenant des groupes uretdione, moins de 5% en mole, de préférence moins de 2,5% en mole et de manière particulièrement préférée aucun des groupes isocyanate n'a/n'ont été transformé(s) en unités structurales (I), (II) et/ou (III).

**5.** Agent de revêtement selon l'une quelconque des revendications 1 à 4, **caractérisé en ce que** le composé contenant des groupes silane (B1) présente des groupes isocyanurate et/ou allophanate et/ou **en ce que** le composé contenant des groupes silane (B1) présente en outre des groupes isocyanate.

**6.** Agent de revêtement selon l'une quelconque des revendications 1 à 5, **caractérisé en ce que** le composé (B1) présente entre 0 et 100% en mole, de préférence 5 à 70% en mole, à chaque fois par rapport à la totalité des unités structurales (II) et (III), d'au moins une unité structurale de formule (II)

$$-NR-(X-SiR''_x(OR')_{3-x}) \qquad (II) \ ,$$

et entre 0 et 100% en mole, de préférence 30 à 95% en mole, à chaque fois par rapport à la totalité des unités structurales (II) et (III), d'au moins une unité structurale de formule (III)

$$-N(X-SiR''_x(OR')_{3-x})_n(X'-SiR''_y(OR')_{3-y})_m \qquad (III)$$

où

R = hydrogène, alkyle, cycloalkyle, aryle ou aralkyle, où la chaîne carbonée peut être interrompue par des groupes oxygène, soufre ou $NR^a$ non adjacents, avec $R^a$ = alkyle, cycloalkyle, aryle ou aralkyle,
R' = hydrogène, alkyle ou cycloalkyle, la chaîne carbonée pouvant être interrompue par des groupes oxygène, soufre ou $NR^a$ non adjacents, avec $R^a$ = alkyle, cycloalkyle, aryle ou aralkyle, de préférence R' = éthyle et/ou méthyle,
X, X' = un radical alkylène linéaire et/ou ramifié ou un radical cycloalkylène comprenant 1 à 20 atomes de carbone, de préférence X, X' = un radical alkylène comprenant 1 à 4 atomes de carbone,
R'' = alkyle, cycloalkyle, aryle ou aralkyle, la chaîne carbonée pouvant être interrompue par des groupes oxygène, soufre ou $NR^a$ non adjacents, $R^a$ = alkyle, cycloalkyle, aryle ou aralkyle, de préférence R'' = un radical alkyle, comprenant en particulier 1 à 6 atomes de carbone,
n = n = 0 à 2, m = 0 à 2, m+n = 2, et
x, y = 0 à 2.

**7.** Agent de revêtement selon l'une quelconque des revendications 1 à 6, **caractérisé en ce que** la proportion totale des groupes isocyanate transformés par rapport aux unités structurales (II) et/ou (III) dans le composé (B1) est située entre 10 et 100% en mole, de préférence entre 30 et 100% en mole et de manière particulièrement préférée entre 50 et 100% en mole.

**8.** Agent de revêtement selon l'une quelconque des revendications 1 à 7, **caractérisé en ce que** le composé (B1) est le produit de transformation de ($\alpha$) bis(3-propyltriméthoxysilyl)amine et le cas échéant de N-(3-(triméthoxysilyl)propyl)butylamine avec du (ß) diisocyanate de 1,6-hexaméthylène, diisocyanate d'isophorone ou diisocyanate de 4,4'-méthylènedicyclohexyle, les dimères de biuret des diisocyanates susmentionnés et/ou les trimères d'isocyanurate des diisocyanates susmentionnés.

**9.** Agent de revêtement selon l'une quelconque des revendications 1 à 8, **caractérisé en ce que** le rapport de mélange, en équivalents du composé contenant des groupes uretdione (B2) aux équivalents du composé contenant des groupes silane (B1) est situé entre 0,5:1,0 et 50,0:1,0, de préférence entre 0,8:1,0 et 20,0:1,0.

10. Agent de revêtement selon l'une quelconque des revendications 1 à 9, **caractérisé en ce que** le composé contenant des groupes hydroxyle (A) est choisi dans le groupe des polyacrylatepolyols, des polyméthacrylatepolyols, des polyesterpolyols, des polyuréthanepolyols et/ou des polysiloxanepolyols, en particulier dans le groupe des polyacrylatepolyols et/ou des polyméthacrylatepolyols.

11. Agent de revêtement selon l'une quelconque des revendications 1 à 10, **caractérisé en ce qu'**il contient, comme composé (A), des composés (A) oligomères ou polymères, contenant des groupes hydroxyle, modifiés par lactone, de préférence modifiés par ε-caprolactone, et de manière tout particulièrement préférée des polyacrylatepolyols contenant des groupes hydroxyle modifiés par ε-caprolactone et/ou des polyméthacrylatepolyols contenant des groupes hydroxyle modifiés par ε-caprolactone.

12. Procédé de revêtement à plusieurs étapes, **caractérisé en ce qu'**on applique, sur un substrat le cas échéant revêtu au préalable, une couche de laque de base pigmentée, puis une couche de l'agent de revêtement selon l'une quelconque des revendications 1 à 11.

13. Procédé de revêtement en plusieurs étapes selon la revendication 12, **caractérisé en ce qu'**après l'application de la couche de laque de base pigmentée, on sèche d'abord la laque de base appliquée à des températures allant de la température ambiante à 80°C et, après l'application de l'agent de revêtement selon l'une quelconque des revendications 1 à 11, on durcit à des températures de 30 à 90°C pendant un laps de temps de 1 min à 10 h.

14. Utilisation de l'agent de revêtement selon l'une quelconque des revendications 1 à 11 comme laque claire pour le laquage de réparation de voitures et/ou pour le revêtement de pièces automobiles et/ou de substrats en matériau synthétique.

15. Utilisation du procédé selon la revendication 12 ou 13 pour le laquage de réparation de voitures et/ou pour le revêtement de substrats en matériau synthétique.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0874491 A
- WO 0874490 A
- WO 0874489 A
- US 5691439 A
- EP 1273640 A
- WO 200198393 A
- EP 1426393 A
- US 2010028308 W
- EP 864575 B
- DE 102010015683343
- US 4598131 A
- EP 0994117 A
- WO 0109260 A
- US 4546046 A
- WO 0503340 A
- DE 102005045228 A
- US 4710542 A
- EP 0245700 B
- WO 9422968 A
- EP 0276501 A
- EP 0249201 A
- WO 9712945 A
- EP 0008127 A
- EP 0692007 A

**In der Beschreibung aufgeführte Nicht-Patentliteratur**

- **B. SINGH ; MITARBEITER.** Carbamylmethylated Melamines, Novel Crosslinkers for the Coatings Industry. *in Advanced Organic Coatings Science and Technology Series,* 1991, vol. 13, 193-207
- Lacke und Druckfarben. Römpp Lexikon. Georg Thieme Verlag, 1998, 250-252